# EUROPÄISCHE PATENTSCHRIFT

(11) **EP 3 556 965 B1**
(45) Veröffentlichungstag und Bekanntmachung des Hinweises auf die Patenterteilung: **19.05.2021**
(21) Anmeldenummer: 19167863.0
(22) Anmeldetag: 08.04.2019
(51) Int. Cl.: E04G 1/06, E04G 1/14, E04G 7/20, F16B 7/04, E04G 7/30

(54) **REDUZIERHÜLSE, ROHRVERBINDER, VERBINDUNGSSYSTEM, GERÜSTBAUTEIL, GERÜSTSYSTEM SOWIE VERFAHREN ZUR HERSTELLUNG EINES GERÜSTBAUTEILS**
REDUCING SLEEVE, PIPE CONNECTOR, CONNECTING SYSTEM, SCAFFOLD COMPONENT, SCAFFOLD SYSTEM AND METHOD FOR MANUFACTURING A SCAFFOLD COMPONENT
MANCHON DE RÉDUCTION, RACCORD DE TUYAU, SYSTÈME DE RACCORDEMENT, COMPOSANT D'ÉCHAFAUDAGE, SYSTÈME D'ÉCHAFAUDAGE AINSI QUE PROCÉDÉ DE FABRICATION D'UN COMPOSANT D'ÉCHAFAUDAGE

(30) Priorität: 19.04.2018 DE 102018109386
(43) Veröffentlichungstag der Anmeldung: 23.10.2019
(73) Patentinhaber: ALTRAD plettac assco GmbH, 58840 Plettenberg (DE)
(72) Erfinder: Jurk, Henri, 01968 Sedlitz (DE); Rätzel, Maik, 01983 Großräschen (DE)
(74) Vertreter: Otten, Roth, Dobler & Partner mbB Patentanwälte

(56) Entgegenhaltungen:
- JP-A- H 051 468
- JP-A- 2002 242 427
- JP-A- 2010 001 725
- JP-A- 2017 180 074
- JP-U- S63 163 346

## Beschreibung

Die Erfindung betrifft eine Reduzierhülse, einen Rohrverbinder, ein Verbindungssystem, ein Gerüstbauteil, ein Gerüstsystem sowie ein Verfahren zur Herstellung eines Gerüstbauteils gemäß dem Oberbegriff des Anspruchs 1 bzw. bzw. 11 bzw. 12 bzw. 13 bzw. 19.

Aus der DE 202 00 728 U1 ist ein als Gerüst-Rohrverbinder bezeichneter Rohrverbinder für Gerüstbauteile wie Gerüstrahmen bekannt.

Weiterhin ist aus der JP H05 1468 A ein Bauteil zur Verbindung eines oberen und eines unteren Gebäuderahmens für ein Gerüst bekannt.

Weiterhin ist aus der JP S63 163346 U, sowie der JP 2017 180074 A Bauteile in Kombination mit einem Rohrstück zur Verbindung von Gerüstelementen bekannt.

Weiterhin ist aus der JP 2002 242427 A eine Rohrverbindung zur direkten Bestätigung eines Verriegelungszustands durch visuelle Beobachtung, die dazu in der Lage ist, Positionsverschiebung, Herabfallen und Verformung von Verriegelungselementen zu verhindern.

Es ist Aufgabe der Erfindung, eine Reduzierhülse, einen Rohrverbinder, ein Verbindungssystem, ein Gerüstbauteil, ein Gerüstsystem bzw. ein Verfahren zur Herstellung eines Gerüstbauteils vorzuschlagen durch welchen bzw. welches sich leichte und stabile Gerüste einfach herstellen lassen, welche insbesondere bei Verschleiß auch kostengünstig aufbereitet werden können.

Diese Aufgabe wird ausgehend von den Merkmalen des Oberbegriffs des Anspruchs 1 bzw. 5 bzw. 11 bzw. 12 bzw. 13 bzw. 19 durch die kennzeichnenden Merkmale des Anspruchs 1 bzw. 5 bzw. 11 bzw. 12 bzw. 13 bzw. 19 gelöst. In den ggf. vorhandenen Unteransprüchen sind vorteilhafte und zweckmäßige Weiterbildungen angegeben.

Ausgehend von einer Reduzierhülse, welche zum Einbau in ein Gerüstbauteil, insbesondere in einen Hohlprofilstab und vorzugsweise in einen Gerüstrahmen, welcher wenigstens einen Hohlprofilstab umfasst, vorgesehen ist, umfasst einen Hülsenkörper mit einer zylindrischen Außenmantelfläche, wobei die Reduzierhülse wenigstens eine Rasteinrichtung umfasst, wobei die Rasteinrichtung eine Rastnase und eine Feder umfasst, wobei die Rastnase in einer Raststellung nach außen über die Außenmantelfläche übersteht und derart gefedert an dem Hülsenkörper angeordnet ist, dass diese aus der Raststellung derart weit gegen eine Rückstellkraft der Feder in den Hülsenkörper eindrückbar ist, dass die Rastnase im Wesentlichen plan in der Außenmantelfläche liegt. Eine derartige Reduzierhülse lässt sich schnell und einfach an einem mit einer bzw. mehreren entsprechend angeordneten Bohrungen versehenen Gerüstbauteil befestigen, ohne das weitere Fertigungsschritte zur Verbindung der Reduzierhülse und des Gerüstbauteils erfolgen müssen. Weiterhin ist auch problemlos eine Demontage der Reduzierhülse von dem Gerüstbauteil durch ein Lösen der Rastverbindung bzw. der Rastverbindungen möglich, so dass die verbaute Reduzierhülse bei Verschleiß schnell durch eine neue Reduzierhülse ersetzt werden kann.

Erfindungsgemäß ist es dabei, dass die Feder der Rasteinrichtung durch einen ersten Rastabschnitt des Hülsenkörpers gebildet ist, welcher längsseitig durch axial in Richtung einer Längsachse des Hülsenkörpers nebeneinander verlaufende Schnitte von einem Halteabschnitt des Hülsenkörpers getrennt ist und querseitig mit dem Halteabschitt des Hülsenkörpers verbunden ist, wobei die Rastnase mit dem Rastabschnitt verbunden ist. Hierdurch lässt sich die Reduzierhülse einfach herstellen und als einteiliges, sortenreines und damit einfach recyclebares Bauteil realisieren.

Weiterhin ist es bevorzugt vorgesehen, dass der Hülsenkörper eine zylindrische Innenmantelfläche aufweist, wobei die Rasteinrichtung derart ausgebildet ist, dass diese in der Raststellung außerhalb eines durch die Innenmantelfläche definierten Innenraums des Hülsenkörpers liegt, wobei die Rastnase insbesondere als Zylinder oder als Kreisring oder als Gewindemutter ausgebildet ist. Hierdurch ist es möglich, ein zylindrisches Bauteil in den Hülsenkörper einzuschieben, ohne dass das Einschieben durch die Rasteinrichtung behindert wird.

Es ist auch vorgesehen, dass die Reduzierhülse wenigstens eine weitere, zweite Rasteinrichtung umfasst, wobei die erste und die zweite Rasteinrichtung gegenüberliegend angeordnet sind und dass die Reduzierhülse insbesondere wenigstens eine erste Bohrung und vorzugsweise wenigstens eine weitere, zweite Bohrung umfasst, wobei die erste und die zweite Bohrung insbesondere gegenüberliegend angeordnet sind. Durch eine zweite, gegenüberliegend angeordnete Rasteinrichtung lässt sich ein stabiler Sitz der Reduzierhülse in einem Hohlprofil gewährleisten.

Schließlich ist es vorgesehen, dass die Reduzierhülse als insbesondere einteiliges Bauteil und vorzugsweise als einteiliges Kunststoffbauteil ausgebildet ist. Hierdurch lässt sich die Reduzierhülse einfach herstellen und als einteiliges, sortenreines und damit einfach recyclebares Bauteil realisieren.

Es wird von einem Rohrverbinder ausgegangen, der zum Einbau in ein Gerüstbauteil, insbesondere in einen Hohlprofilstab und vorzugsweise in einen Gerüstrahmen, welcher wenigsten einen Hohlprofilstab umfasst, eine Doppelhülse umfasst, wobei die Doppelhülse einen ersten, unteren Steckzapfen mit einer ersten zylindrischen Außenmantelfläche mit einem ersten Außendurchmesser umfasst und wobei die Doppelhülse einen zweiten, oberen Steckzapfen mit einer zweiten zylindrischen Außenmantelfläche mit einem zweiten Außendurchmesser umfasst, wobei der erste, untere Steckzapfen wenigstens eine Rasteinrichtung umfasst, wobei die Rasteinrichtung eine Rastnase und eine Feder umfasst, wobei die Rastnase in einer Raststellung nach außen über die erste Außenmantelfläche übersteht und derart gefedert an dem ersten, unteren Steckzapfen angeordnet ist, dass diese aus der Raststellung derart weit gegen eine Rückstellkraft der Feder in den ersten Steckzapfen eindrückbar ist, wobei die Rastnase im Wesentlichen plan in der ersten Außenmantelfläche liegt und wobei der erste, untere Steckzapfen einen Außendurchmesser aufweist, welcher größer ist als ein Außendurchmesser des zweiten, oberen Steckzapfens. Ein derartiger Rohrverbinder lässt sich schnell und einfach an einem mit einer bzw. mehreren entsprechend angeordneten Bohrungen versehenen Gerüstbauteil befestigen, ohne das weitere Fertigungsschritte zur Verbindung des Rohrverbinders und des Gerüstbauteils erfolgen müssen. Weiterhin ist auch problemlos eine Demontage des Rohrverbinders von dem Gerüstbauteil durch ein Lösen der Rastverbindung bzw. der Rastverbindungen möglich, so dass der verbaute Rohrverbinder bei Verschleiß schnell durch einen neuen Rohrverbinder ersetzt werden kann.

Erfindungsgemäß ist es hierbei, dass die Feder der Rasteinrichtung durch einen Rastabschnitt des unteren Steckzapfens der Doppelhülse gebildet ist, welcher längsseitig durch axial in Richtung einer Längsachse des Rohrverbinders nebeneinander verlaufende Schnitte von einem Halteabschnitt des unteren Steckzapfens getrennt ist und querseitig mit dem Halteabschnitt des unteren Steckzapfens verbunden ist, wobei die Rastnase mit dem Rastabschnitt verbunden ist. Hierdurch lässt sich der Rohrverbinder einfach herstellen und als einteiliges, sortenreines und damit einfach recyclebares Bauteil realisieren.

Weiterhin ist es vorgesehen, dass der erste, untere Steckzapfen der Doppelhülse wenigstens eine weitere, zweite Rasteinrichtung umfasst, wobei die erste und die zweite Rasteinrichtung gegenüberliegend angeordnet sind und dass der zweite, obere Steckzapfen des Rohrverbinders insbesondere wenigstens eine erste Bohrung und vorzugsweise wenigstens eine weitere, zweite Bohrung umfasst, wobei die erste und die zweite Bohrung insbesondere gegenüberliegend angeordnet sind. Durch eine zweite, gegenüberliegend angeordnete Rasteinrichtung lässt sich ein stabiler Sitz des Rohrverbinders in einem Hohlprofil gewährleisten.

Es ist auch vorgesehen, dass der erste, untere Steckzapfen der Doppelhülse als rohrartiger Steckzapfen mit einem zylindrischen Innenraum oder als dornartiger Steckzapfen aus Vollmaterial ausgebildet ist und dass der zweite, obere Steckzapfen des Rohrverbinders als rohrartiger Steckzapfen mit einem zylindrischen Innenraum oder als dornartiger Steckzapfen aus Vollmaterial ausgebildet ist. Durch dornartige, aus Vollmaterial gebildete Steckzapfen lassen sich unter Inkaufnahme eines höheren Materialaufwands auf einfache Weise stabile Rohrverbinder herstellen. Rohrartig ausgebildete Steckzapfen haben den Vorteil, dass diese ein geringes Gewicht aufweisen und dass durch diese die Hohlprofile nicht verschlossen werden, so dass eindringendes Wasser problemfrei ablaufen kann.

Weiterhin ist es vorgesehen, dass der erste, untere Steckzapfen der Doppelhülse an seiner Außenmantelfläche und insbesondere oberhalb der Rasteinrichtung wenigstens eine als Einformung, Vertiefung oder Durchbruch ausgebildete Aufnahme aufweist und insbesondere zwei sich gegenüberliegende Aufnahmen umfasst. Hierdurch lässt sich ergänzend zu der Rastverbindung eine weitere, insbesondere formschlüssige Verbindung zwischen dem Hohlprofil und Rohrverbinder schaffen

Es ist auch vorgesehen, dass die Doppelhülse entweder als insbesondere einteiliges Bauteil und vorzugsweise einteiliges Kunststoffbauteil ausgebildet ist oder dass der Rohrverbinder zusätzlich zu der insbesondere als einteiliges Bauteil, vorzugsweise einteiliges Kunststoffbauteil ausgeführten Doppelhülse eine Kernhülse umfasst, wobei sich die Kernhülse mit ihrer Länge insbesondere über eine Länge der Doppelhülse erstreckt, wobei die Kernhülse insbesondere als Metallhülse ausgebildet ist, wobei die Kernhülse insbesondere reibschlüssig mit der eine Außenhülse bildenden Doppelhülse verbunden ist. Durch eine einteile Ausführung ist die Herstellung vereinfacht und ist der Rohrverbinder als einteiliges, sortenreines Bauteil einfach recyclebar. Durch eine zweiteilige bzw. zweischichtige Ausbildung des Rohrverbinders entsteht durch dessen vorzugsweise metallische Kernhülse eine besonderes stabiler Rohrverbinder und durch dessen den Außenmantel bildende Doppelhülse aus Kunststoff ein durch die guten Gleiteigenschaften von Kunststoff einfach handhabbares Bauteil.

Schließlich ist es vorgesehen, dass die Kernhülse im Bereich jeder Rasteinrichtung der Doppelhülse eine Ausklinkung aufweist, wobei die Ausklinkung derart bemessen ist, dass die Rasteinrichtung in Richtung einer Längsachse des Rohrverbinders verformbar ist und dass es insbesondere vorgesehen ist, dass die Kernhülse im Bereich jeder Bohrung der Doppelhülse eine weitere Ausklinkung aufweist, wobei die weitere Ausklinkung vorzugsweise als Durchgangsbohrung oder als Gewindebohrung ausgebildet ist. Hierdurch behält der zweischichtige Rohrverbinder trotz seiner stabilisierenden Innenhülse sämtliche Vorteile, welche der einteilige Rohrverbinder in Bezug auf einfache Herstellbarkeit und Vielseitigkeit aufweist.

Bei dem erfindungsgemäßen Verbindungssystem ist das erste Einbauteil als Rohrverbinder ausgebildet und in das untere Gerüstbauteil einbaubar, wobei weiterhin das zweite Einbauteil als Reduzierhülse ausgebildet ist und in das obere Gerüstbauteil einbaubar ist, wobei die Reduzierhülse insbesondere nach wenigstens einem der Ansprüche 1 bis 4 ausgebildet ist und wobei der Rohrverbinder nach wenigstens einem der Ansprüche 5 bis 10 ausgebildet ist und dass der Rohrverbinder in die Reduzierhülse einsteckbar ist. Ein derartiges Verbindungssystem ist einfach in ein Gerüstsystem integrierbar, das sowohl die Einbauteile einfach herstellbar, bei einteiliger Ausführung leicht recyclebar und einfach montier und demontierbar sind.

Das erfindungsgemäße Gerüstbauteil, welches insbesondere einen Hohlprofilstab oder einen Gerüstrahmen mit wenigstens einem Hohlprofilstab umfasst ist dadurch gekennzeichnet, dass das Gerüstbauteil einen oberen Rohrabschnitt und einen unteren Rohrabschnitt umfasst, dass das Gerüstbauteil weiterhin eine Reduzierhülse nach wenigstens einem der Ansprüche 1 bis 4 umfasst und/oder dass das Gerüstbauteil einen Rohrverbinder nach wenigstens einem der Ansprüche 5 bis 10 umfasst, dass an dem oberen Rohrabschnitt wenigstens eine Bohrung angeordnet ist, in welche eine Rastnase des Rohrverbinders eingerastet ist und/oder dass an dem unteren Rohrabschnitt wenigstens eine Bohrung angeordnet ist, in welche eine Rastnase der Reduzierhülse eingerastet ist und dass es insbesondere auch vorgesehen ist, dass an dem oberen Rohrabschnitt durch sich gegenüberliegende und radial verlaufende Trennschlitze, welche den oberen Rohrabschnitt durchtrennen, ein insbesondere kreisringabschnittähnlicher Umformabschnitt ausgebildet ist, welcher durch eine Presskraft derart plastisch umgeformt und hierbei flach gedrückt ist, dass der umgeformte Umformabschnitt in einen Hohlraum des oberen Rohrabschnitts und eine Aufnahme der Reduzierhülse ragt. Derartige Gerüstbauteile lassen sich einfach herstellen und einfach mit derartig ausgebildeten anderen Gerüstbauteilen zusammenfügen und trennen.

Das erfindungsgemäße Gerüstsystem umfasst wenigsten ein erstes Gerüstbauteil, insbesondere einen Hohlprofilstab oder einen Gerüstrahmen mit wenigstens einem Hohlprofilstab und wenigstens ein zweites Gerüstbauteil, insbesondere einen Hohlprofilstab oder einen Gerüstrahmen mit wenigstens einem Hohlprofilstab, wobei das erste Gerüstbauteil wenigstens ein erstes Einbauteil umfasst, und wobei das zweite Gerüstbauteil wenigstens ein zweites Einbauteil umfasst, hierbei ist es vorgesehen, dass das zweite Einbauteil als Reduzierhülse ausgebildet ist und insbesondere nach wenigstens einem der Ansprüche 1 bis 4 ausgebildet ist und dass das erste Einbauteil als Rohrverbinder ausgebildet ist und insbesondere nach wenigstens einem der Ansprüche 5 bis 10 ausgebildet ist, dass der Rohrverbinder in einer endseitigen, oberen Öffnung des Hohlprofilstabs des ersten, unteren Gerüstbauteils aufgenommen ist und mit diesem verrastet ist und dass die Reduzierhülse in einer endseitigen, unteren Öffnung des Hohlprofilstabs des zweiten, oberen Gerüstbauteils aufgenommen ist und mit diesem verrastet ist, dass der erste, untere Gerüstbauteil mit einem oberen Steckzapfen des Rohrverbinders in einen Innenraum der mit dem zweiten, oberen Gerüstbauteil verbundenen Reduzierhülse einsteckbar ist und dass das Gerüstsystem insbesondere derart ausgebildet ist, dass wenigstens zwei der Gerüstbauteile nach Anspruch 12 ausgebildet sind. Mit einem derartigen Gerüstsystem lassen sich insbesondere die Gerüstrahmen einfach herstellen und miteinander verbauen bzw. voneinander demontieren.

Weiterhin ist es vorgesehen, dass das erste Gerüstbauteil als erster Gerüstrahmen ausgebildet ist und dass das zweite Gerüstbauteil als zweiter Gerüstrahmens ausgebildet ist. Zum Zusammenbau zweier Gerüstrahmen kommen in der Regel zwei Rohrverbinder und zwei Reduzierhülsen zum Einsatz, so dass ein optimaler Zusammenhalt zwischen den beiden Gerüstrahmen gewährleistet ist.

Es ist weiterhin vorgesehen, dass der erste Gerüstrahmen einen zweiten Hohlprofilstab umfasst, wobei in einer endseitigen Öffnung des zweiten Hohlprofilstabs des ersten, unteren Gerüstrahmens ein zweiter Rohrverbinder aufgenommen und mit dem zweiten Hohlprofilstab des ersten, unteren Gerüstrahmens verrastet und insbesondere formschlüssig verbunden ist, dass der zweite Gerüstrahmen einen zweiten Hohlprofilstab umfasst, wobei in einer endseitigen Öffnung des zweiten Hohlprofilstabs des zweiten, oberen Gerüstrahmens eine zweite Reduzierhülse aufgenommen und mit dem zweiten Hohlprofilstab des zweiten, oberen Gerüstrahmens verrastet ist. Hierdurch ist ein optimaler Zusammenhalt und eine leicht e Demontierbarkeit der Gerüstrahmen gewährleistet.

Es ist auch vorgesehen, dass jeder Hohlprofilstab wenigstens eine Bohrung zur Aufnahme einer Rastnase einer Rasteinrichtung der Reduzierhülse bzw. des Rohrverbinders aufweist. Hierdurch ist ein sicherer Zusammenhalt zwischen den dauerhaft zu verbindenden Bauteilen gewährleistet.

Es ist auch vorgesehen, dass die Reduzierhülse mit ihrem Außendurchmesser und der untere Rohrabschnitt des Hohlprofilsstabs mit seinem Innendurchmesser nach der Art einer Gleit-Schiebe-Passung aufeinander abgestimmt sind, dass der Rohrverbinder mit einem Außendurchmesser seines unteren Steckzapfens und der obere Rohrabschnitt des Hohlprofilstabs mit seinem Innendurchmesser nach Art einer Gleit-Schiebe-Passung aufeinander abgestimmt sind und dass der Rohrverbinder mit einem Außendurchmesser seines oberen Steckzapfens und die Reduzierhülse mit ihrem Innendurchmesser nach Art einer Gleit-Schiebe-Passung aufeinander abgestimmt sind. Hierdurch sind eine leichte Montierbarkeit und eine leichte Demontierbarkeit gewährleistet.

Schließlich ist es vorgesehen, dass der obere Gerüstrahmen unter Zwischenlage der ersten und der zweiten Reduzierhülse und des ersten und des zweiten Rohrverbinders zwischen dem ersten und zweiten Hohlprofilstab des unteren Gerüstrahmens und dem ersten und zweiten Hohlprofilstabs des oberen Gerüstrahmens derart zusammengesteckt sind, dass der erste Rohrverbinder mit seinem unteren Steckzapfen in das erste Hohlprofil des unteren Gerüstrahmens eingesteckt ist und mit seinem oberen Steckzapfen in die mit dem ersten Hohlprofil des oberen Gerüstrahmen verbundene erste, obere Reduzierhülse eingesteckt ist und dass der zweite Rohrverbinder mit seinem unteren Steckzapfen in das zweite Hohlprofil des unteren Gerüstrahmens eingesteckt ist und mit seinem oberen Steckzapfen in die mit dem zweiten Hohlprofil des oberen Gerüstrahmen verbundene zweite, obere Reduzierhülse eingesteckt ist. Eine derartige Verbindung lässt sich einfach herstellen.

Das erfindungsgemäße Verfahren zur Herstellung eines Gerüstbauteils, insbesondere eines Hohlprofilstabs oder eines Gerüstrahmens, welcher wenigstens einen Hohlprofilstab umfasst, wobei das Gerüstbauteil einen Rohrverbinder nach wenigstens einem der Ansprüche 5 bis 10 umfasst, umfasst die Schritte:
- Einbringen von sich gegenüberliegenden und radial verlaufenden Trennschlitzen an einem oberen Rohrabschnitt des Hohlprofilstabs des Gerüstbauteils, wobei der obere Rohrabschnitt von den Trennschlitzen durchtrennt wird, und ein insbesondere kreisringabschnittähnlicher Umformabschnitt ausgebildet wird,
- Einstecken des Rohrverbinders in eine endseitige Öffnung des Hohlprofilstabs derart, dass eine Rasteinrichtung des Rohrverbinders mit einer Rastnase in eine Bohrung des Hohlprofilstabs einrastete und
- plastisches Eindrücken des Umformabschnitts, derart dass der umgeformte Mantelbereich in einen Hohlraum des oberen Rohrabschnitts und in eine Aufnahme des Rohrverbinders ragt.

Auf diese Weise lassen sich Gerüstbauteil schnell herstellen und Rohrverbinder zuverlässig und unverlierbar halten. Weitere Einzelheiten der Erfindung werden in der Zeichnung anhand von schematisch dargestellten Ausführungsbeispielen beschrieben.

Hierbei zeigt:
Figur 1: ein aus einem erfindungsgemäßen Gerüstsystem erstelltes Gerüst in Explosionsansicht;
Figur 2a: eine Seitenansicht des zweiten, oberen Gerüstrahmens des in der Figur 1 gezeigten Gerüsts;
Figur 2b, 2c: ein Details des in der Figur 2a gezeigten ersten, unteren Gerüstrahmens;
Figur 3a - 3d: vier Ansichten eines in dem ersten, unteren Gerüstrahmen verbauten Rohrverbinders;
Figur 4a: eine weitere Seitenansicht des zweite, oberen Gerüstrahmens des in der Figur 1 gezeigten Gerüsts;
Figur 4b, 4c: ein Details des in der Figur 4a gezeigten zweiten, oberen Gerüstrahmens;
Figur 5a - 5d: vier Ansichten einer in dem zweiten, oberen Gerüstrahmen verbauten Reduzierhülse;
Figur 6a, 6b: zwei Detailansichten des in der Figur 1 gezeigten rechten Geländerpfostens;
Figur 7a - 7d: vier Ansichten einer in dem rechten Geländerpfosten verbauten Reduzierhülse;
Figur 8a - 8d: vier Ansichten einer Ausführungsvariante einer Reduzierhülse;
Figur 9a - 9c: drei Ansichten einer zweiten Ausführungsvariante eines Rohrverbinders;
Figur 10a - 10c: drei Ansichten eines als Hohlprofilstab eines Gerüstrahmes ausgeführten Gerüstbauteils, welches für den Einbau des in den Figuren 9a - 9c gezeigten Rohrverbinders vorgesehen ist und
Figur 11a - 11b: zwei Ansichten des in dem Hohlprofilstab, welche in den Figuren 10a bis 10c gezeigt ist, verbauten Rohrverbinders, welcher in den Figuren 9a - 9c gezeigt ist.

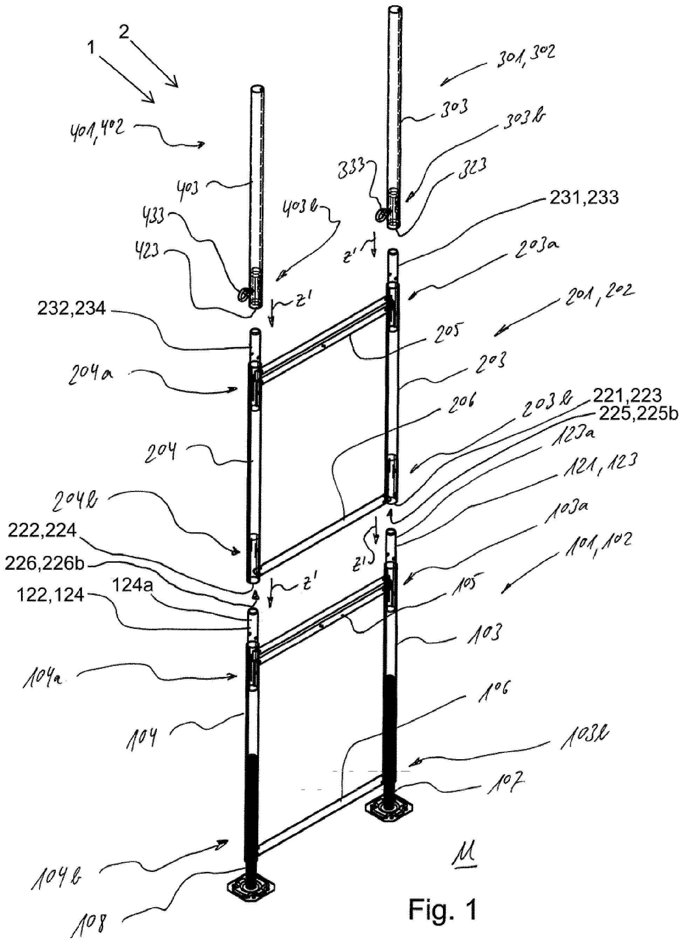

In der Figur 1 ist ein aus einem erfindungsgemäßen Gerüstsystem 1 erstelltes Gerüst 2 in Explosionsansicht gezeigt. Das Gerüstsystem 1 bzw. das Gerüst 2 umfasst ein erstes Gerüstbauteil 101, welches als erster, unterer Gerüstrahmen 102 ausgebildet ist, welcher einen ersten, unteren Hohlprofilstab 103 und einen zweiten, unteren Hohlprofilstab 104 und die Hohlprofilstäbe 103, 104 verbindende Querstreben 105, 106 umfasst. Die Hohlprofilstäbe 103, 104 weisen jeweils einen oberen Rohrabschnitt 103a, 104a und einen unteren Rohrabschnitt 103b, 104b auf. Das untere Gerüstbauteil 102 umfasst weiterhin Einbauteile 121, 122, welche als Rohrverbinder 123, 124 ausgebildet sind. Hierbei ist der Rohrverbinder 123 in den oberen Rohrabschnitt 103a des Hohlprofils 103 eingesteckt und hierbei ist der Rohrverbinder 124 in den oberen Rohrabschnitt 104a des Hohlprofils 104 eingesteckt, so dass ein oberer Steckzapfen 123a und ein oberer Steckzapfen 124a jeweils aus den oberen Rohrabschnitten 103a bzw. 104a herausragen. In die unteren Rohrabschnitte 103b und 104b ist jeweils ein Gewindefuß 107 bzw. 108 eingeschraubt, so dass das untere Gerüstbauteil 101 auf einem Untergrund U aufgestellt werden kann.

Das Gerüstsystem 1 bzw. das Gerüst 2 umfasst auch ein zweites Gerüstbauteil 201, welches als zweiter, oberer Gerüstrahmen 202 ausgebildet ist, welcher einen ersten, oberen Hohlprofilstab 203 und einen zweiten, oberen Hohlprofilstab 204 und die Hohlprofilstäbe 203, 204 verbindende Querstreben 205, 206 umfasst. Die Hohlprofilstäbe 203, 204 weisen jeweils einen oberen Rohrabschnitt 203a, 204a und einen unteren Rohrabschnitt 203b, 204b auf. Das obere Gerüstbauteil 202 umfasst weiterhin Einbauteile 221, 222, welche als Reduzierhülsen 223, 224 ausgebildet sind. Hierbei ist die Reduzierhülse 223 in den unteren Rohrabschnitt 203b des Hohlprofils 203 eingesteckt und hierbei ist die Reduzierhülse 224 in den unteren Rohrabschnitt 204b des Hohlprofils 204 eingesteckt, so dass die Reduzierhülse 223 bzw. 224 jeweils in den unteren Rohrabschnitten 203b bzw. 204b aufgenommen ist.

Zum Zusammenbau ist es vorgesehen, den zweiten Gerüstrahmen 202 in die Pfeilrichtung z' nach unten auf den unteren Gerüstrahmen 102 derart aufzusetzen, dass der Steckzapfen 123a in einen Innenraum 225b eines Hülsenkörpers 225 der Reduzierhülse 223 eingesteckt wird und dass der Steckzapfen 124a in einen Innenraum 226b eines Hülsenkörpers 226 der Reduzierhülse 224 eingesteckt wird, so dass die Gerüstbauteile 101 und 201 miteinander verbunden sind.

Ergänzend ist in der Figur 1 ein drittes Gerüstbauteil 301 dargestellt, welches als Geländerpfosten 302 ausgeführt ist, welcher einen Hohlprofilstab 303, eine Reduzierhülse 323 und eine Schrauböse 333 umfasst. Die Reduzierhülse 323 ist in einem unteren Rohrabschnitt 303b des Hohlprofilstabs 303 aufgenommen. Die Schrauböse 333 ist durch den Hohlprofilstab 303 hindurch in die Reduzierhülse 323 eingeschraubt.

Ergänzend ist in der Figur 1 noch ein viertes Gerüstbauteil 401 dargestellt, welches als Geländerpfosten 402 ausgeführt ist, welcher einen Hohlprofilstab 403, eine Reduzierhülse 423 und eine Schrauböse 433 umfasst. Die Reduzierhülse 423 ist in einem unteren Rohrabschnitt 403b des Hohlprofilstabs 403 aufgenommen. Die Schrauböse 433 ist durch den Hohlprofilstab 403 hindurch in die Reduzierhülse 423 eingeschraubt.

Zur Verbindung der beiden Geländerpfosten 302 und 402 mit dem zweiten, oberen Gerüstrahmen 202 umfasst der oberen Gerüstrahmen 202 als weitere Einbauteile 231, 232 zwei Rohrverbinder 233, 234, welche in die oberen Rohrabschnitte 203a, 204a des Gerüstrahmens 202 eingesteckt sind. Auf diese Rohrverbinder 233, 234 lassen sich die Geländerpfosten 302 und 402 in Richtung weiterer Pfeile z' aufstecken.

Nun kann das Gerüst 2 durch nicht dargestellte Gerüstböden und nicht dargestellte Geländerstreben, sowie weitere Gerüstrahmen und Geländerpfosten vervollständigt werden.

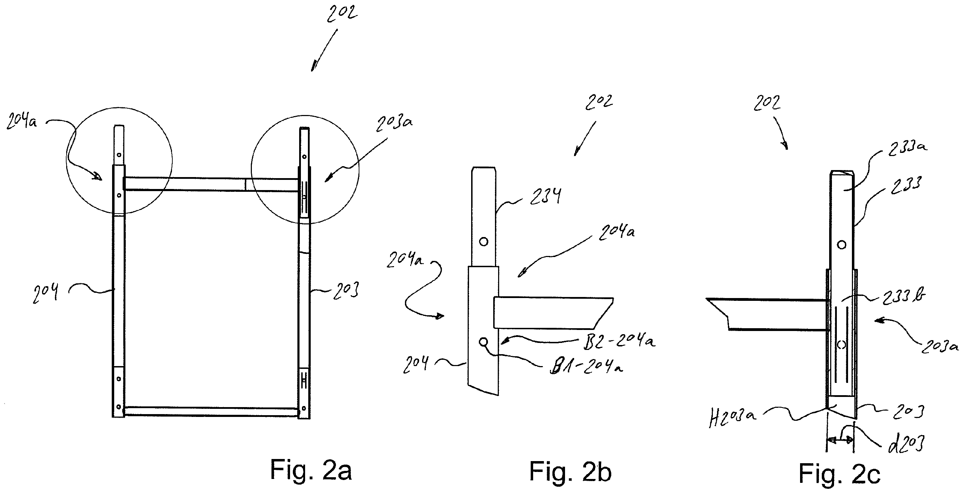

Die Figur 2a zeigt eine Seitenansicht des zweiten, oberen Gerüstrahmens 202 des in der Figur 1 gezeigten Gerüsts 2. In der Figur 2b ist der Gerüstrahmen 202 im Bereich des oberen Rohrabschnitts 204a seines zweiten Profilstabs 204 vergrößert dargestellt. Abweichend von einer Seitenansicht ist der Gerüstrahmen 202 im Bereich des oberen Rohrabschnitts 203a seines ersten Profilstabs 203 im Schnitt gezeigt. Dieses Detail ist in der Figur 2c vergrößert dargestellt. In der Schnittansicht ist der in den oberen Rohrabschnitt 203a eingesteckte Rohrverbinder 233 sowohl mit seinem oberen Steckzapfen 233a als auch mit seinem unteren Steckzapfen 233b erkennbar. Hierbei ist der Rohrverbinder 233 mit seinem unteren Steckzapfen 233b in einen Hohlraum H203a des oberen Rohrabschnitts 203a eingesteckt und ragt mit seinem oberen Steckzapfen 233a über den Hohlprofilstab 203 hinaus.

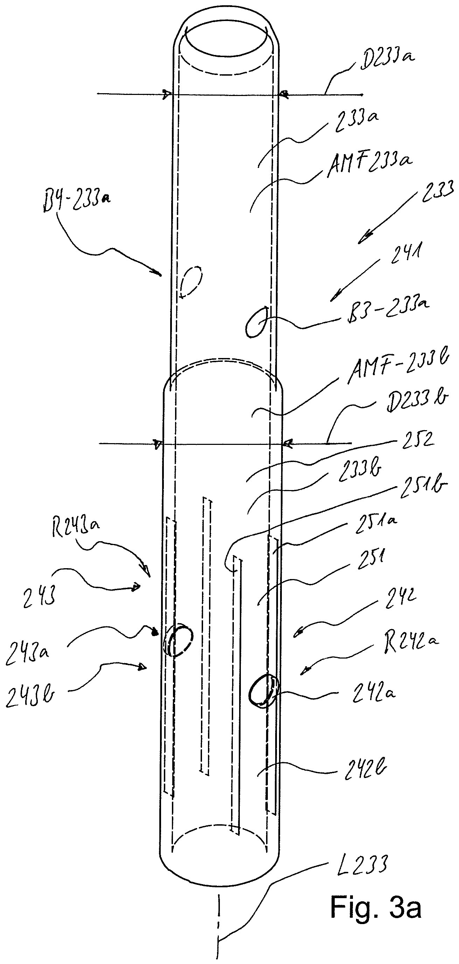

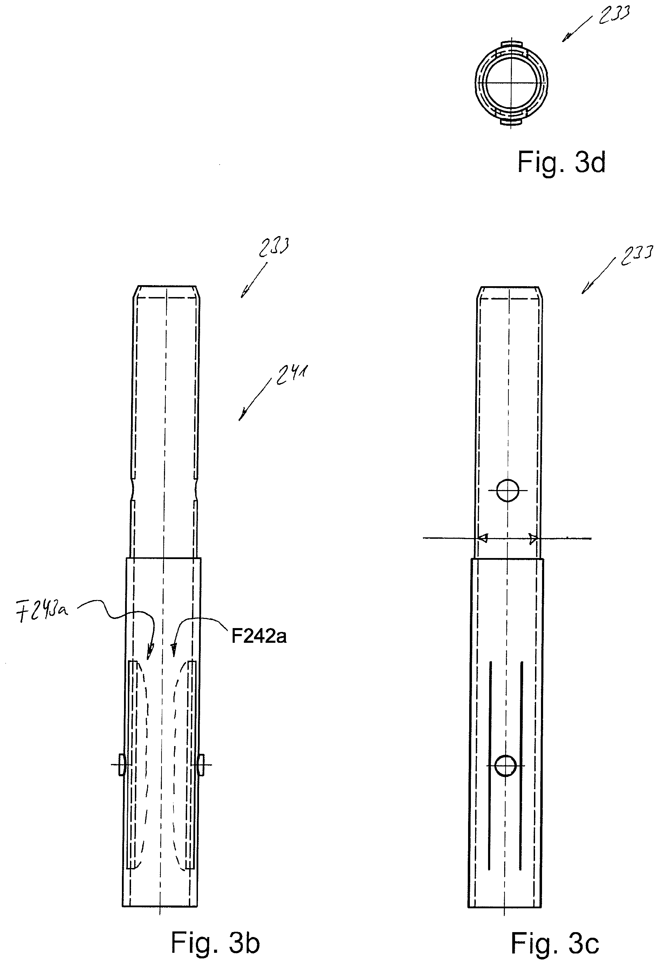

In den Figuren 3a bis 3d ist der Rohrverbinder 233 in vier Ansichten gezeigt, wobei der Rohrverbinder 233 exemplarisch für alle an Hohlprofilstäben der Gerüstrahmen 102, 202 verbauten Rohrverbinder beschrieben ist. Der Rohrverbinder 233 ist in perspektivischer Ansicht (Figur 3a), in Seitenansicht in Pfeilrichtung y (Figur 3b) und in Seitenansicht in Pfeilrichtung x (Figur 3c), sowie in Draufsicht in die Pfeilrichtung z' (Figur 3d) gezeigt.

Der Rohrverbinder 233 umfasst eine Doppelhülse 241. Diese Doppelhülse 241 umfasst den oberen Steckzapfen 233a und den unteren Steckzapfen 233b. Der untere Steckzapfen 233b weist eine erste zylindrische Außenmantelfläche AMF233b mit einem ersten Außendurchmesser D233b auf und der obere Steckzapfen 233a weist eine zweite zylindrische Außenmantelfläche AMF233a mit einem zweiten Außendurchmesser D233a auf.

Der untere Steckzapfen 233b umfasst eine erste Rasteinrichtung 242 und eine zweite Rasteinrichtung 243, wobei die Rasteinrichtungen 242, 243 jeweils eine Rastnase 242a, 243a und eine Feder 242b, 243b umfassen, wobei jede Rastnase 242a, 243a in einer Raststellung R242a, R243a, in welcher diese in den bislang genannten Figuren gezeigt ist, nach außen über die erste Außenmantelfläche AMF233b übersteht. Hierbei sind die Rastnasen 242a, 243a mittels der Federn 242b, 243b derart gefedert an dem ersten, unteren Steckzapfen 234b angeordnet, dass diese aus der Raststellung R242a, R243a derart weit gegen eine Rückstellkraft der jeweiligen Feder 242b bzw. 243b in den ersten Steckzapfen 234b hinein in eine Freigabestellung F242a, F243a (in Figur 3b schematisch mit gestrichelten Linien angedeutet) eindrückbar sind, dass die Rastnasen 242a, 243a im Wesentlichen plan in der ersten Außenmantelfläche AMF233b liegen. Weiterhin ist ein Außendurchmesser D233b des unteren Steckzapfens 233b größer als ein Außendurchmesser D233a des oberen Steckzapfens 233a ausgebildet, so dass bei einem einheitlichen Innendurchmesser d203 (siehe Figur 2c) des ersten Hohlprofilstabs 203 und bei gleicher Bemessung der weiteren Hohlprofilstäbe des ersten und zweiten Gerüstrahmens bzw. der Geländerpfosten zwischen dem oberen Steckzapfen 233a und dem entsprechend der Figur 1 auf diesen aufgesteckten Hohlprofilstab 303 Raum für die Reduzierhülse 323 verbleibt. Aus einer vergleichenden Betrachtung der Figuren 2a bis 2c und 3a bis 3d ist erkennbar, dass der Rohrverbinder 233 mit seinen Rastnasen 242a, 243a in gegenüberliegenden Bohrungen des oberen Rohrabschnitts 203a des Hohlprofilstabs 203 einrastet, wenn dieser mit einer entsprechenden Ausrichtung in den Hohlprofilstab 203 eingesteckt wird. In der Figur 2c ist der Gerüstrahmen 202 in geschnittener Ansicht gezeigt, so dass die in dem oberen Rohrabschnitt 203a des Hohlprofilstabs 203 angeordneten Bohrungen nicht sichtbar sind. In der Figur 2b ist der vergleichbar zu dem Hohlprofilstab 203 ausgebildete Hohlprofilstab 204 in Seitenansicht gezeigt, in dieser Darstellung ist an dessen oberem Rohrabschnitt 204a mit einer Bohrung B1-204a eine derartige Bohrung sichtbar. Eine zweite Bohrung B2-204a liegt verdeckt der Bohrung B1-204a gegenüber. Der obere Rohrabschnitt 203a des Hohlprofilstabs 203 ist in Bezug auf diese Bohrungen identisch ausgebildet. Auch die Hohlprofilstäbe 103 und 104 des unteren Gerüstrahmens 102 (siehe Figur 1) sind in Bezug auf die Bohrungen zum Einrasten der Rohrverbinder 123, 124 identisch ausgebildet.

Ein Lösen des Rohrverbinders 233 aus dem Hohlprofilstab 203 ist dadurch möglich, dass beide Rastnasen 242a, 243a gleichzeitig eingedrückt werden und der Rohrverbinder 233 hierbei aus dem Hohlprofilstab 203 herausgezogen wird.

Aus der Figur 3a ist erkennbar, dass die Feder 242b der Rasteinrichtung 242 durch einen Rastabschnitt 251 des unteren Steckzapfens 233b der Doppelhülse 241 gebildet ist, welcher längsseitig durch axial in Richtung einer Längsachse L233 des Rohrverbinders 233 nebeneinander verlaufende Schnitte 251a, 251b von einem Halteabschnitt 252 des unteren Steckzapfens 233b getrennt ist und querseitig mit dem Halteabschnitt 252 des unteren Steckzapfens 233b verbunden ist. Hierbei ist die Rastnase 242a mit dem Rastabschnitt 251 verbunden. Der Rastabschnitt 251 bildet eine beidseitig eingespannte Blattfeder, wobei die Einspannung durch eine direkte Anbindung an den Halteabschnitt 252 erfolgt. Der Rohrverbinder 233 ist als Kunststoffbauteil ausgebildet, wobei der Halteabschnitt 252 und der Rastabschnitt 251 materialeinheitlich, und einteilig ausgebildet sind. Die zweite Rasteinrichtung 243 des unteren Steckzapfens 233b der Doppelhülse 241 ist analog zu der ersten Rasteinrichtung 242 und dieser gegenüberliegend ausgebildet. Auch die anderen bislang erwähnten Rohrverbinder sind jeweils mit zwei derartigen Rasteinrichtungen ausgebildet. Entsprechend sind auch die oberen Rohrabschnitte aller anderen Hohlprofilstäbe der Gerüstrahmen mit Bohrungen ausgebildet.

Der untere Steckzapfen 233b und der oberen Steckzapfen 233a der Doppelhülse 241 sind jeweils als rohrartiger Steckzapfen mit einem zylindrischen Innenraum ausgebildet. Alternativ ist es gemäß einer nicht dargestellten Ausführungsvariante auch vorgesehen, dass der untere Steckzapfen und der obere Steckzapfen der Doppelhülse jeweils als dornartiger Steckzapfen aus Vollmaterial ausgebildet sind. Diese dornartigen Steckzapfen weisen dann im Bereich der Rasteinrichtungen jeweils Aussparungen auf, so dass die Rastabschnitte in Richtung der Längsachse des Rohrverbinders einfedern können.

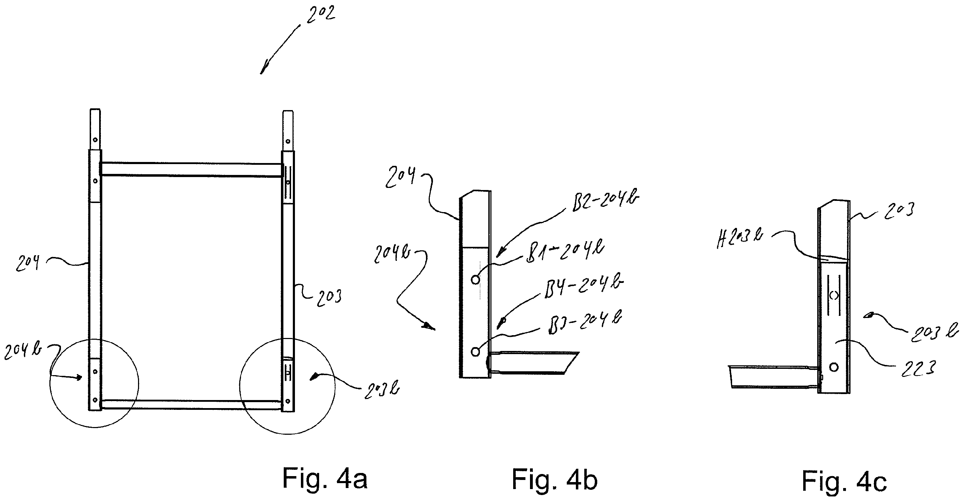

Die Figur 4a zeigt nochmals die aus der Figur 2a bekannte Seitenansicht des zweiten, oberen Gerüstrahmens 202 des in der Figur 1 gezeigten Gerüsts 2. In der Figur 4b ist der Gerüstrahmen 202 im Bereich des unteren Rohrabschnitts 204b seines zweiten Profilstabs 204 vergrößert dargestellt. Abweichend von einer Seitenansicht ist der Gerüstrahmen 202 im Bereich des unteren Rohrabschnitts 203b seines ersten Profilstabs 203 im Schnitt gezeigt. Dieses Detail ist in der Figur 4c vergrößert dargestellt. In der Schnittansicht ist die in den unteren Rohrabschnitt 203b eingesteckte Reduzierhülse 223 erkennbar. Hierbei ist die Reduzierhülse 223 in einem Hohlraum H203b des unteren Rohrabschnitts 203b aufgenommen.

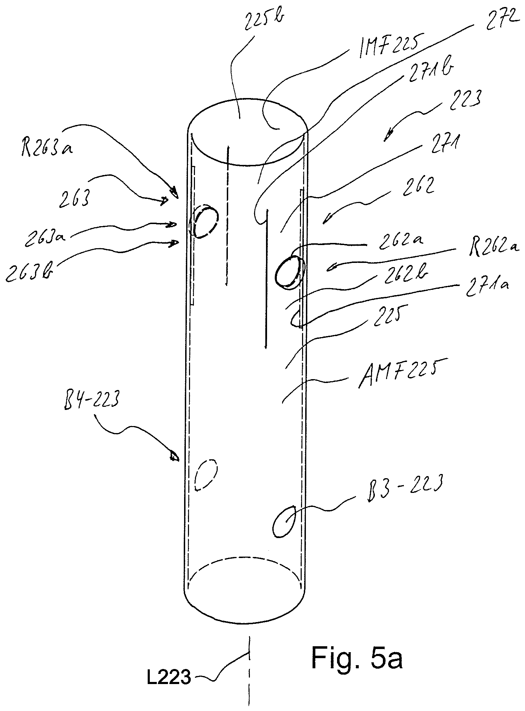

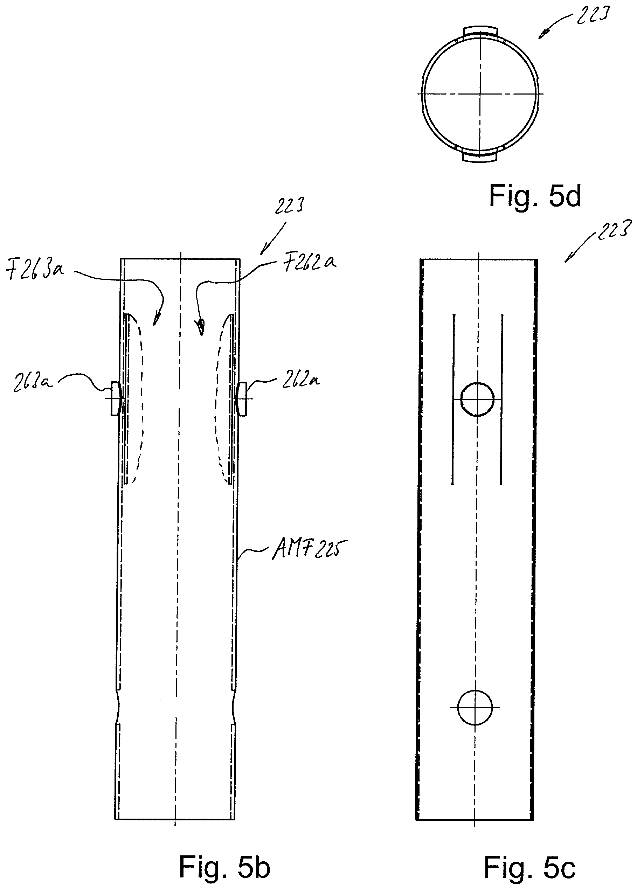

In den Figuren 5a bis 5d ist die Reduzierhülse 223 in vier Ansichten gezeigt, wobei die Reduzierhülse 223 exemplarisch für alle an Hohlprofilstäben der Gerüstrahmen 202, 203 verbauten Reduzierhülsen beschrieben ist. Die Reduzierhülse 223 ist in perspektivischer Ansicht (Figur 5a), in Seitenansicht in Pfeilrichtung y (Figur 5b) und in Seitenansicht in Pfeilrichtung x (Figur 5c), sowie in Draufsicht in die Pfeilrichtung z' (Figur 5d) gezeigt.

Die Reduzierhülse 223 umfasst den Hülsenkörper 225, welcher eine zylindrische Außenmantelfläche AMF225 umfasst. Weiterhin umfasst die Reduzierhülse 223 eine erste Rasteinrichtung 262 und eine zweite Rasteinrichtung 263, wobei die Rasteinrichtungen 262, 263 jeweils eine Rastnase 262a, 263a und eine Feder 262b, 263b umfassen und wobei die Rastnase 262a, 263a in einer Raststellung R262a bzw. R263a nach außen über die Außenmantelfläche AMF225 überstehen und derart gefedert an dem Hülsenkörper 225 angeordnet sind, dass diese aus der Raststellung R262a bzw. R263a derart weit gegen eine Rückstellkraft der Feder 262b, 263b in eine Freigabestellungen F262a, F263a, mit gestrichelten Linien schematisch in der Figur 5b angedeutet, in den Hülsenkörper 225 eindrückbar sind, dass die Rastnasen 262a, 263a im Wesentlichen plan in der Außenmantelfläche AMF225 liegen.

Der Hülsenkörper 225 umfasst auch eine zylindrische Innenmantelfläche IMF225, wobei die Rasteinrichtung 262 derart ausgebildet ist, dass die Rasteinrichtung 262 in der Raststellung R262a außerhalb eines durch die Innenmantelfläche IMF225 definierten Innenraums 225b des Hülsenkörpers 225 liegt. Die Rastnasen 262a, 263a sind als Zylinder ausgebildet. Gemäß hier nicht dargestellter Ausführungsvarianten ist es vorgesehen, wenigstens eine Rastnase als Kreisring oder als Gewindemutter auszubilden.

Aus der Figur 5a ist weiterhin erkennbar, dass die Feder 262b der Reduzierhülse 223 durch einen Rastabschnitt 271 des Hülsenkörpers 225 der Reduzierhülse 223 gebildet ist, welcher längsseitig durch axial in Richtung einer Längsachse L223 der Reduzierhülse 223 nebeneinander verlaufende Schnitte 271a, 271b von einem Halteabschnitt 272 des Hülsenkörpers 225 getrennt ist und querseitig mit dem Halteabschnitt 272 des Hülsenkörpers 225 verbunden ist. Hierbei ist die Rastnase 262a mit dem Rastabschnitt 271 verbunden. Der Rastabschnitt 271 bildet eine beidseitig eingespannte Blattfeder, wobei die Einspannung durch eine direkte Anbindung an den Halteabschnitt 272 realisiert ist. Die Reduzierhülse 223 ist als Kunststoffbauteil ausgebildet, wobei der Halteabschnitt 272 und der Rastabschnitt 271 materialeinheitlich, und einteilig ausgebildet sind. Die zweite Rasteinrichtung 263 des Hülsenkörpers 225 ist analog zu der ersten Rasteinrichtung 262 und dieser gegenüberliegend ausgebildet. Auch die anderen bislang erwähnten Reduzierhülsen sind jeweils mit zwei derartigen Rasteinrichtungen ausgebildet.

Aus einer vergleichenden Betrachtung der Figuren 4a bis 4c und 5a bis 5d ist erkennbar, dass die Reduzierhülse 223 mit ihren Rastnasen 262a, 263a in gegenüberliegenden Bohrungen des unteren Rohrabschnitts 203b des Hohlprofilstabs 203 einrastet, wenn diese mit einer entsprechenden Ausrichtung von unten in den Hohlprofilstab 203 eingesteckt wird. In der Figur 4c ist der Gerüstrahmen 202 in geschnittener Ansicht gezeigt, so dass die in dem unteren Rohrabschnitt 203b des Hohlprofilstabs 203 angeordneten Bohrungen nicht sichtbar sind. In der Figur 4b ist der vergleichbar zu dem Hohlprofilstab 203 ausgebildete Hohlprofilstab 204 in Seitenansicht gezeigt, in dieser Darstellung ist an dessen unterem Rohrabschnitt 204b mit einer Bohrung B1-204b eine derartige Bohrung sichtbar. Eine zweite Bohrung B2-204b liegt verdeckt der Bohrung B1-204b gegenüber. Der untere Rohrabschnitt 203b des Hohlprofilstabs 203 ist in Bezug auf diese Bohrungen identisch ausgebildet. Auch die Hohlprofilstäbe 103 und 104 des unteren Gerüstrahmens 102 (siehe Figur 1) sind in Bezug auf die Bohrungen zum Einrasten der Reduzierhülsen identisch ausgebildet. Unterhalb der auf gleicher Höhe liegenden Bohrungen B1-204b, B2-204b weist der in der Figur 4b gezeigte Hohlprofilstab 204 noch zwei weitere, sich gegenüberliegenden Bohrungen B3-204b und B4-204b auf, welche bei eingesteckter Reduzierhülse 224 mit weiteren Bohrungen der Reduzierhülse 224 korrespondieren. Diese Bohrungen sind exemplarisch an der identisch ausgeführten und in der Figur 5a gezeigten Reduzierhülse 223 gezeigt und exemplarisch mit B3-223 und B4-223 bezeichnet.

Auch die Hohlprofilstäbe 303, 403 der Geländerpfosten 302, 402 (siehe Figur 1) weisen Bohrungen auf, in welche die Reduzierhülse 323 bzw. 423 einrastet.

Da auch die Rohrverbinder, welche in die Reduzierhülsen eingesteckt werden, Bohrungen aufweisen, welche auf die Bohrungen des Hohlprofilstabs und der Reduzierhülse ausgerichtet sind, ist es möglich z.B. einen nicht dargestellten Bolzen durch den unteren Rohrabschnitt des Hohlprofilstabs und die dort verbauten Reduzierhülse und den in diese eingeschobenen Rohrverbinder zu stecken. An dem in der Figur 3a gezeigten oberen Rohrabschnitt 233a des Rohrverbinders 233 sind die erwähnten Bohrungen, welche auf die Bohrungen B3-223 und B4-223 der Reduzierhülse 223 und die Bohrungen des unteren Rohrabschnitts 203a des Hohlprofilstabs 203 ausgerichteten sind, als Bohrungen B3-233a und B4-233a bezeichnet.

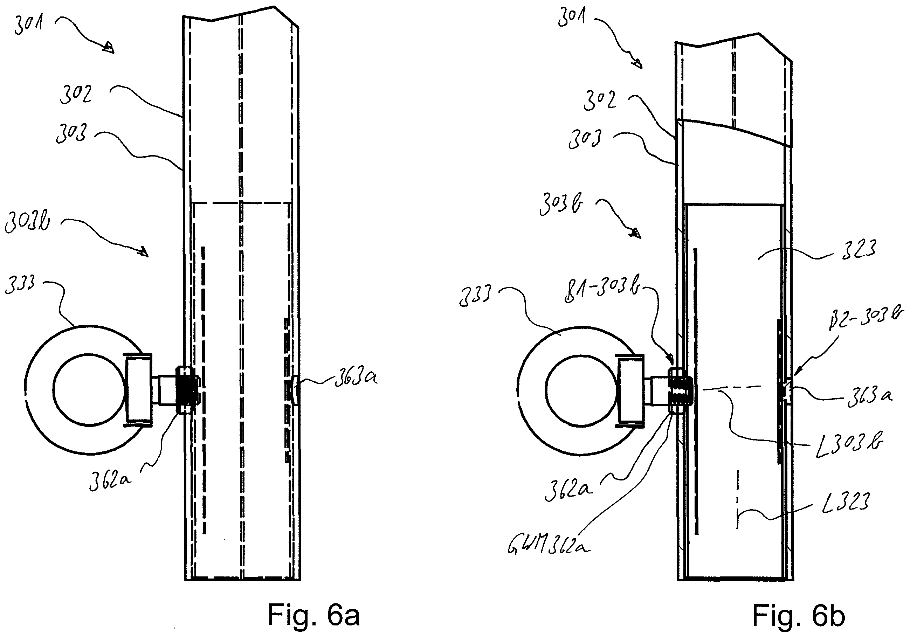

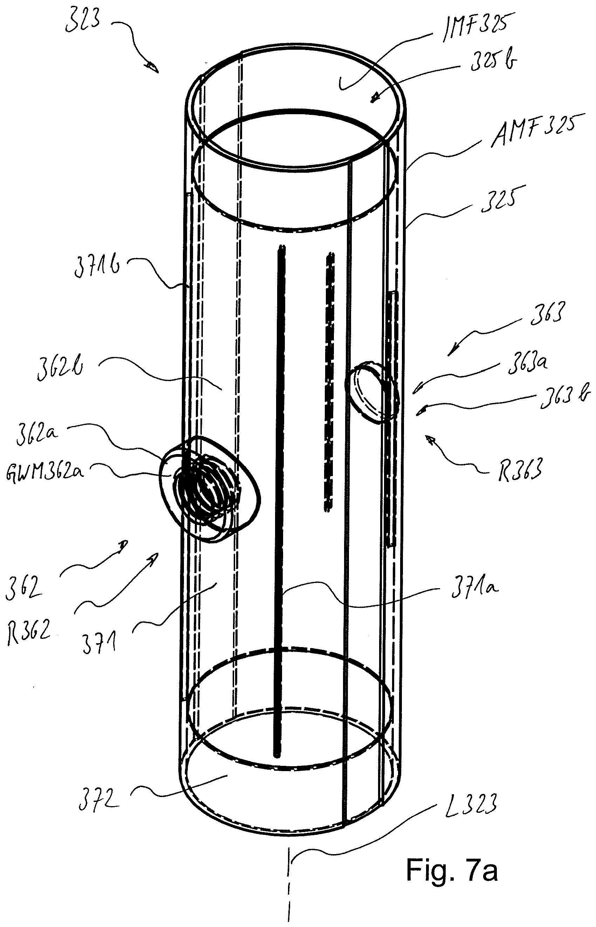

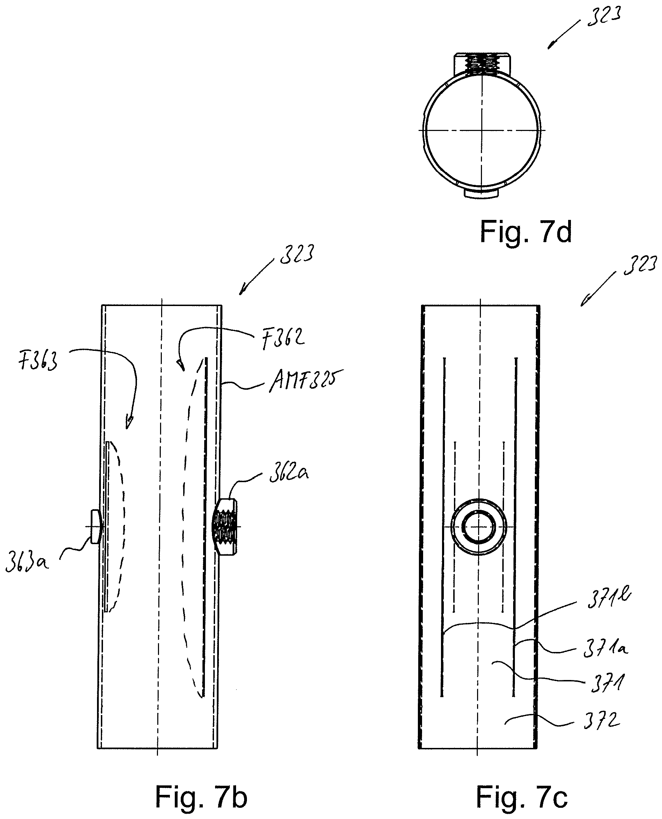

Wie bereits oben erwähnt weisen auch die Hohlprofilstäbe 303, 402 der Gländerpfosten 302, 402 Bohrungen auf. Zur näheren Erläuterung sind in den Figuren 6a und 6b eine Seitenansicht und eine geschnittene Seitenansicht des unteren Rohrabschnitts 303b des als Geländerpfosten 302 ausgebildeten dritten Gerüstbauteils 301 in vergrößerter Ansicht gezeigt. In dem Geländerpfosten 302 ist die Reduzierhülse 323 verbaut. Diese unterscheidet sich von der in dem Gerüstrahmen verbauten Reduzierhülse und ist in den Figuren 7a bis 7d als Einzelbauteil in diversen Ansichten gezeigt, wobei die Reduzierhülse 323 exemplarisch für alle an Hohlprofilstäben von Geländerpfosten verbauten Reduzierhülsen beschrieben ist. Hierbei ist die Reduzierhülse 323 ist in perspektivischer Ansicht (Figur 7a), in Seitenansicht in Pfeilrichtung y (Figur 7b) und in Seitenansicht in Pfeilrichtung x (Figur 7c), sowie in Draufsicht in die Pfeilrichtung z' (Figur 7d) gezeigt.

Die Reduzierhülse 323 umfasst einen Hülsenkörper 325, welcher eine zylindrische Außenmantelfläche AMF325 umfasst. Weiterhin umfasst die Reduzierhülse 323 eine erste Rasteinrichtung 362 und eine zweite Rasteinrichtung 363, wobei die Rasteinrichtungen 362, 363 jeweils eine Rastnase 362a, 363a und eine Feder 362b, 363b umfassen und wobei die Rastnase 362a, 363a in einer Raststellung R362a bzw. R363a nach außen über die Außenmantelfläche AMF325 überstehen und derart gefedert an dem Hülsenkörper 325 angeordnet sind, dass diese aus der Raststellung R362a bzw. R363a derart weit gegen eine Rückstellkraft der Feder 362b, 363b in Freigabestellungen F362a, F363a, mit gestrichelten Linien schematisch in der Figur 7b angedeutet, in den Hülsenkörper 325 eindrückbar sind, dass die Rastnasen 362a, 363a im Wesentlichen plan in der Außenmantelfläche AMF325 liegen.

Der Hülsenkörper 325 umfasst auch eine zylindrische Innenmantelfläche IMF325, wobei die Rasteinrichtung 362 derart ausgebildet ist, dass die Rasteinrichtung 362 in der Raststellung R362a außerhalb eines durch die Innenmantelfläche IMF325 definierten Innenraums 325b des Hülsenkörpers 325 liegt. Die Rastnase 362a ist als Gewindemutter GWM362a ausgebildet. Die Rastnase 363a ist als Zylinder ausgebildet.

Aus der Figur 7a ist weiterhin erkennbar, dass die Feder 362b der Reduzierhülse 323 durch einen Rastabschnitt 371 des Hülsenkörpers 325 der Reduzierhülse 323 gebildet ist, welcher längsseitig durch axial in Richtung einer Längsachse L323 der Reduzierhülse 323 nebeneinander verlaufende Schnitte 371a, 371b von einem Halteabschnitt 372 des Hülsenkörpers 325 getrennt ist und querseitig mit dem Halteabschnitt 372 des Hülsenkörpers 325 verbunden ist. Hierbei ist die Rastnase 362a mit dem Rastabschnitt 371 verbunden. Der Rastabschnitt 371 bildet eine beidseitig eingespannte Blattfeder, wobei die Einspannung durch eine direkte Anbindung an den Halteabschnitt 372 realisiert ist. Die Reduzierhülse 323 ist als Kunststoffbauteil ausgebildet, wobei der Halteabschnitt 372 und der Rastabschnitt 371 materialeinheitlich, und einteilig ausgebildet sind. Die zweite Rasteinrichtung 363 des Hülsenkörpers 325 ist analog zu der ersten Rasteinrichtung 362 und dieser gegenüberliegend ausgebildet, wobei die erste Rasteinrichtung 362 größer dimensioniert ist als die zweite Rasteinrichtung 363. Hierdurch ist es möglich, dass der Rastabschnitt 371 elastisch soweit deformiert werden kann, dass auch die vergleichsweise groß dimensionierte Gewindemutter GWM362a plan in der Außenmantelfläche AMF325 liegt, damit die Reduzierhülse 323 in den Holprofilstab 303 ein- und ausgeschoben werden kann.

Entsprechend umfasst der Hohlprofilstab 303 an seinem unteren Rohrabschnitt 303b eine erste Bohrung B1-303b, welche in ihrem Durchmesser auf die als Gewindemutter GWM362a ausgebildet Rastnase 362a angepasst ist, und eine zweite Bohrung B2-303b, welche in ihrem Durchmesser auf die als Zylinder ausgeführte zweite Rastnase 363a angepasst ist (siehe Figuren 6a, 6b). Die beiden Bohrungen B1-303b und B2-303b liegen auf einer gemeinsamen Längsachse L303b, welche die Längsachse L323 der Reduzierhülse 323 orthogonal schneidet. In den Figuren 6a und 6b ist auch die aus der Figur 1 bekannte Schrauböse 333 abgebildet, welche in die aus der Bohrung B1-303b ragende Gewindemutter GWM362a der Reduzierhülse 323 eingeschraubt ist.

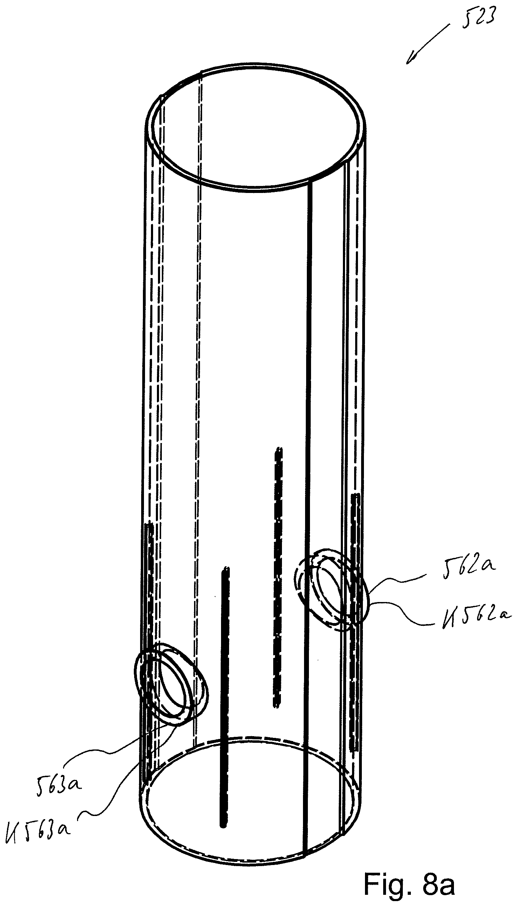

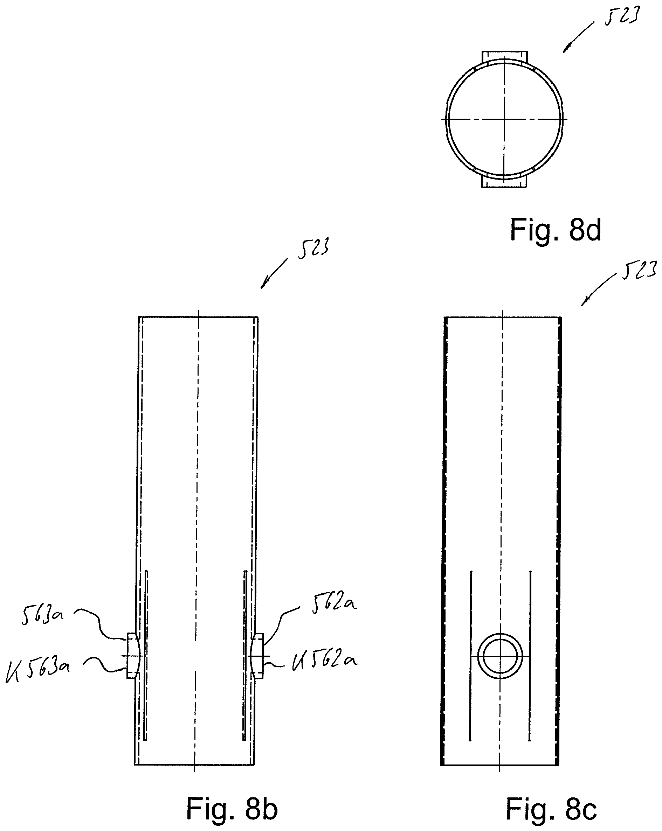

In den Figuren 8a bis 8d ist eine dritte Ausführungsvariante einer Reduzierhülse 523 in perspektivischer Ansicht (Figur 8a), in Seitenansicht in Pfeilrichtung y (Figur 8b) und in Seitenansicht in Pfeilrichtung x (Figur 8c), sowie in Draufsicht in die Pfeilrichtung z' (Figur 8d) gezeigt. Die Reduzierhülse 523 unterscheidet sich von der in den Figuren 5a bis 5d gezeigten Reduzierhülse 223 dadurch, dass diese zusätzlich zu den Rastnasen keine Bohrungen B3-223 und B4-223 aufweist. Um dies auszugleichen sind die Rastnasen 562a, 563a nicht als Zylinder, sondern als Kreisringe K562a bzw. K563a ausgebildet sind. Somit kann beispielsweise ein Sicherungsbolzen durch die Kreisringe K562a, K563a und durch diesen zugeordnete Bohrungen in einem für die Reduzierhülse 523 angepassten, nicht dargestellten Hohlprofilstab hindurchgesteckt werden.

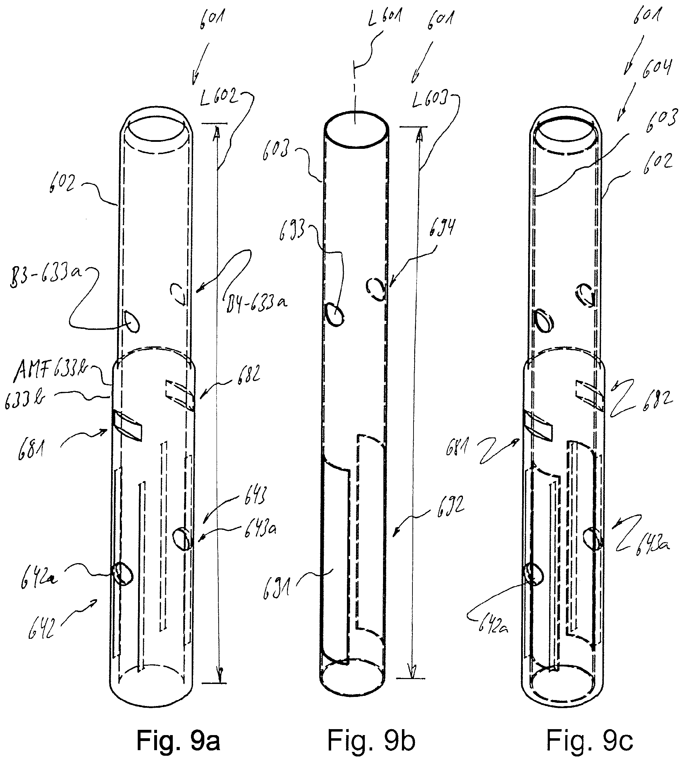

In den Figuren 9a bis 9c ist eine zweite Ausführungsvariante eines Rohrverbinders 601 in drei perspektivischen Ansichten gezeigt. Der Rohrverbinder 601 ist zweiteilig bzw. zweischichtig ausgebildet und umfasst neben einer insbesondere als einteiliges Kunststoffbauteil ausgeführten Doppelhülse 602 (siehe Figur 9a) eine Kernhülse 603 (siehe Figur 9b), welche insbesondere als Metallhülse ausgebildet ist. Hierbei ist die Doppelhülse 602 als Außenhülse ausgebildet. Hierbei ist die Kernhülse 603 als Innenhülse ausgebildet.

Die Kernhülse 603 weist eine Länge L603 auf, welche etwa einer Länge L602 der Doppelhülse 602 entspricht. In der Figur 9c ist der vollständige Rohrverbinder 601 als transparentes Bauteil dargestellt. Im zusammengebauten Zustand steckt die Kernhülse 603 als Innenhülse in der Doppelhülse 602, welche eine Außenhülse bildet. Die beiden Hülsen 602, 603 sind reibschlüssig miteinander verbunden. Eine Ausführungsvariante der Erfindung sieht vor, dass diese zusätzlich oder alternativ auch noch miteinander verklebt und/oder formschlüssig verbunden sind. Die Doppelhülse 602 ist grundsätzlich analog zu der insbesondere in der Figur 3a gezeigten ersten Ausführungsvariante des Rohrverbinders ausgeführt und umfasst ebenso wie dieser zwei Rasteinrichtungen 642, 643 mit Rastnasen 642a, 643a und Bohrungen B3-633a und B4-633a. Zusätzlich sind an einem unteren Steckzapfen 233b oberhalb der Rasteinrichtungen 642, 643 zwei sich gegenüberliegende Aufnahme 681, 682 ausgebildet, welche auf einer Außenmantelfläche AMF633b des unteren Steckzapfens 633b Einformungen bzw. Vertiefungen oder Durchbrüche bilden.

Die Kernhülse 603 umfasst im Bereich jeder Rasteinrichtung 642, 643 der Doppelhülse 602 eine Ausklinkung 691, 692, wobei die Ausklinkungen 691, 692 derart bemessen sind, dass jede Rasteinrichtung 642, 643 in Richtung einer Längsachse L601 des Rohrverbinders 601 ungestört von der Kernhülse 603 verformbar ist. Weiterhin umfasst die Kernhülse 603 im Bereich jeder Bohrung B3-633a, B4-633a der Doppelhülse 602 eine weitere Ausklinkung 693, 694, wobei die Ausklinkungen 693, 694 jeweils als Durchgangsbohrung ausgebildet sind. Gemäß einer Ausführungsvariante ist es vorgesehen, wenigstens eine der Ausklinkungen als Gewindebohrung auszubilden. Gemäß einer nicht dargestellten Ausführungsvariante ist es auch vorgesehen, dass die Kernhülse 603 auch im Bereich der Ausnehmungen 681, 682 der Doppelhülse 602 Ausklinkungen aufweist.

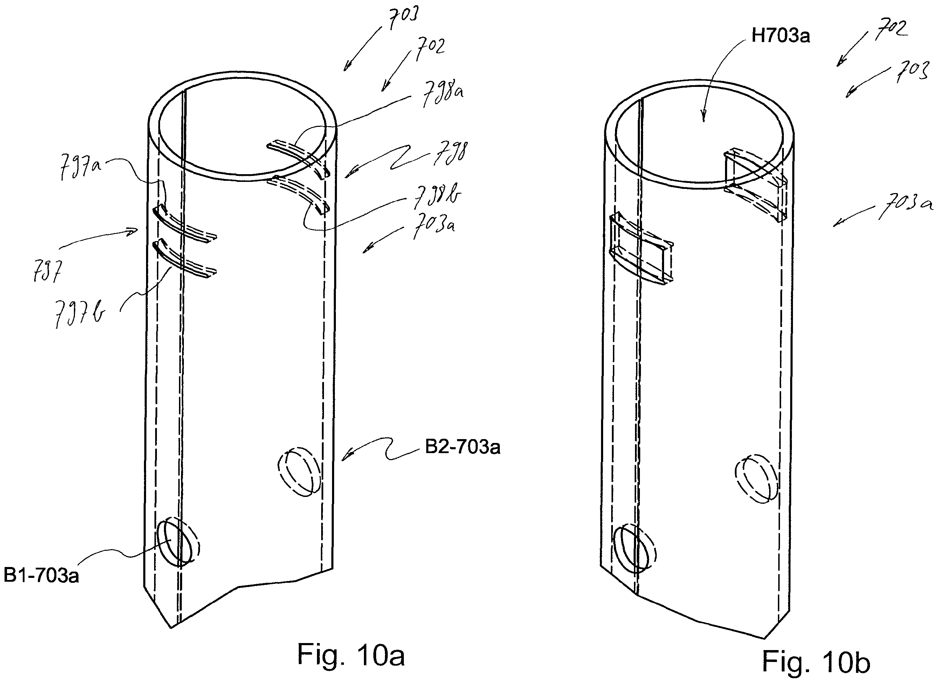

In den Figuren 10a und 10b ist in perspektivscher und in transparenter perspektivischer Ansicht eine Ausführungsvariante eines Gerüstrahmens 702 im Bereich eines oberen Rohrabschnitts 703a eines seiner Hohlprofilstäbe 703 gezeigt. Der Gerüstrahmen 702 ist grundsätzlich entsprechend den oben beschriebenen Gerüstrahmen 102 und 202 ausgebildet und weist insbesondere Bohrungen B1-703a und B2-703a auf, in welche der in der Figur 9c gezeigte Rohverbinder 601 mit seinen Rastnasen 642a, 643a eingerastet werden kann, so dass seine Aufnahmen 681, 682 auf an dem oberen Rohrabschnitt 703a ausgebildete Umformabschnitte 797, 798 ausgerichtet sind. Die Umformabschnitte 797, 798 sind durch sich gegenüberliegende und radial verlaufende Trennschlitze 797a, 797b sowie 798a, 798b gebildet, welche den oberen Rohrabschnitt 703a durchtrennen. Durch diese radial verlaufenden Trennschlitze 797a, 797b bzw. 798a, 798b sind die Umformabschnitte 797, 798 jeweils kreisringabschnittähnlich ausgebildet (siehe Figur 10a). Somit lässt sich der obere Rohrabschnitt 703a in deren Bereich durch eine Presskraft derart plastisch umformen und hierbei flach drücken, dass der Umformabschnitt 797, 798 im umgeformten Zustand (siehe Figur 10a) in einen Hohlraum H703a des oberen Rohrabschnitts 703a und damit bei eingesteckter Rohrverbinder 601 in deren Aufnahmen 681 bzw. 682 ragt und die Rohrverbinder 601 somit formschlüssig in dem Rohrabschnitt 703a gehalten ist.

Ein Gerüstbauteil wie der Gerüstrahmen 702 wird dann derart hergestellt, dass zunächst sich gegenüberliegende und radial verlaufende Trennschlitze an einem oberen Rohrabschnitt des Hohlprofilstabs des Gerüstbauteils eingebracht werden, wobei der obere Rohrabschnitt von den Trennschlitzen durchtrennt wird, und ein insbesondere kreisringabschnittähnlicher Umformabschnitt ausgebildet wird, dass dann die Rohrverbinder in endseitige Öffnung der Hohlprofilstäbe derart eingesteckt werden, dass Rasteinrichtungen des Rohrverbinders mit Rastnasen in Bohrungen der Hohlprofilstäbe einrasteten und dass dann ein plastisches Eindrücken der Umformabschnitte derart erfolgt, dass die umgeformten Mantelbereiche in Hohlräume der oberen Rohrabschnitte und in Ausnehmung der Rohrverbinder ragen.

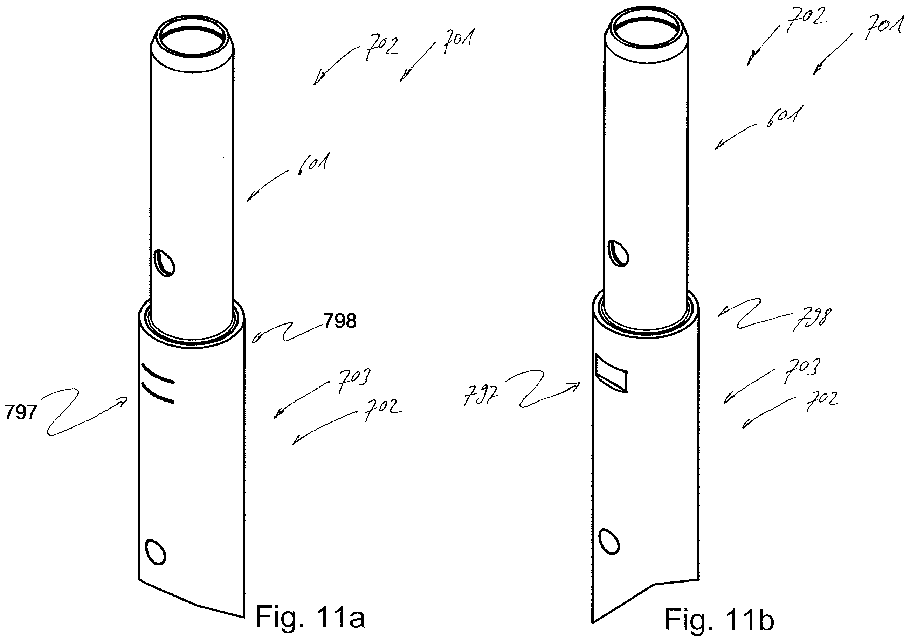

Die Figuren 11a und 11b zeigen analog zu den Figuren 10a, 10b einen Abschnitt eines durch den eingesteckten Rohrverbinder 601 vervollständigten als Gerüstrahmen 702 ausgebildeten Gerüstbauteils 701 bei unverformten Umformabschnitten 797, 798 (Figur 11a) und bei verformten Umformabschnitten 797, 798.

### Bezugszeichenliste:

- 1: Gerüstsystem
- 2: Gerüst
- 101: erstes Gerüstbauteil
- 102: erster, unterer Gerüstrahmen als 101
- 103: erster, unterer Hohlprofilstab von 102
- 103a: oberen Rohrabschnitt von 103
- 103b: unteren Rohrabschnitt von 103
- 104: zweiter, unterer Hohlprofilstab von 102
- 104a: oberen Rohrabschnitt 104
- 104b: unteren Rohrabschnitt 104
- 105, 106: Querstreben von 102
- 107, 108: Gewindefuß
- 121, 122: Einbauteil
- 123, 124: Rohrverbinder als 121 bzw. 122
- 123a: oberer Steckzapfen von 123
- 124a: oberer Steckzapfen vom 124

- 201: zweites Gerüstbauteil
- 202: Gerüstrahmen als 201
- 203: erster, oberer Hohlprofilstab von 202
- 203a: oberer Rohrabschnitt von 203
- 203b: unterer Rohrabschnitt von 203
- d203: Innendurchmesser
- H203b: Hohlraum
- 204: zweiter, oberer Hohlprofilstab von 202
- 204a: oberer Rohrabschnitt von 203
- 204b: unteren Rohrabschnitt von 203
- B1-204a: erste Bohrung in 204a
- B2-204a: zweite Bohrung in 204a
- B1-204b: erste Bohrung in 204b
- B2-204b: zweite Bohrung in 204b
- B3-204b: dritte Bohrung in 204b
- B4-204b: vierte Bohrung in 204b
- 205, 206: Querstrebe von 202
- 221, 222: Einbauteil
- 223: Reduzierhülse
- L223: Längsachse von 223
- 224: Reduzierhülse
- 225: Hülsenkörper von 223
- 225b: Innenraum von 225
- AMF225: zylindrische Außenmantelfläche von 225
- IMF225: zylindrische Innenmantelfläche von 225
- 226: Hülsenkörper von 224
- 226b: Innenraum von 226
- 231, 232: Einbauteil
- 233: Rohrverbinder
- B3-223: Bohrung
- B4-223: Bohrung
- L233: Längsachse von 233
- 233a: oberer Steckzapfen von 233
- AMF233a: zylindrischen Außenmantelfläche von 233
- B3-233a: Bohrung in 233a
- B4-233a: Bohrung in 233a
- D233a: Außendurchmesser von 233a
- 233b: unteren Steckzapfen von 233
- AMF233b: zylindrische Außenmantelfläche von 233b
- D233b: erster Außendurchmesser von 233b
- 234: zweiter Rohrverbinder
- 241: Doppelhülse
- 242: erste Rasteinrichtung
- 242a: Rastnase von 242
- 242b: Feder von 242
- F242a: Freigabestellung von 242
- R242a: Raststellung von 242
- 243: zweite Rasteinrichtung
- 243a: Rastnase von 243
- 243b: Feder von 243
- FF243a: Freigabestellung von 243
- R243a: Raststellung von 243
- 251: Rastabschnitt von 233b
- 251a, 251b: Schnitte in 233b
- 252: Halteabschnitt von 233b
- 262: erste Rasteinrichtung
- 262a: Rastnase von 262
- 262b: Feder von 262
- F262a: Freigabestellungen von 262
- R262a: Raststellung von 262
- 263: zweite Rasteinrichtung
- 263a: Rastnase von 263
- 263b: Feder von 263
- F263a: Freigabestellungen von 263
- R263a: Raststellung von 263
- 271: Rastabschnitt
- 271a, 271b: Schnitt
- 272: Halteabschnitt

- 301: drittes Gerüstbauteil
- 302: Geländerpfosten als 301
- 303: Hohlprofilstab von 302
- 303b: unterer Rohrabschnitt von 303
- B1-303b: erste Bohrung in 303b
- B2-303b: zweite Bohrung in 303b
- L303b: Längsachse vom B1-303b und B2303b
- 323: Reduzierhülse von 302
- L323: Längsachse von 323
- 325: Hülsenkörper von 323
- 325b: Innenraum von 325
- AMF325: zylindrische Außenmantelfläche von 325
- IMF325: zylindrische Innenmantelfläche von 325
- 333: Schrauböse von 302
- 362: erste Rasteinrichtung
- 362a: Rastnase von 362
- 362b: Feder von 362
- F362a: Freigabestellungen von 362
- GWM362a: Gewindemutter
- R362a: Raststellung von 362
- 363: zweite Rasteinrichtung
- 363a: Rastnase von 363
- 363b: Feder von 363
- F363a: Freigabestellungen von 363
- R363a: Raststellung von 363
- 371: Rastabschnitt 323
- 371a, 371b: Schnitt in 323
- 372: Halteabschnitt

- 401: viertes Gerüstbauteil
- 402: Geländerpfosten als 401
- 403: Hohlprofilstab von 402
- 403b: unterer Rohrabschnitt von 403
- 423: Reduzierhülse von 402
- 433: Schrauböse von 402

- 523: Reduzierhülse
- K562a, K563a: Kreisring

- 601: Rohrverbinder
- L601: Längsachse von 601
- 602: Doppelhülse von 601
- L602: Länge von 602
- 603: Kernhülse von 601
- L603: Länge von 603
- 633b: unterer Steckzapfen
- AMF633b: Außenmantelfläche von 633b
- B3-633a: Bohrung in 633a
- B4-633a: Bohrung in 633a
- 642: Rasteinrichtung
- 642a: Rastnase von 642
- 643: Rasteinrichtung
- 643a: Rastnase von 643
- B3-633a: Bohrung in 633a
- B4-633a: Bohrung in 633a
- 681, 682: Aufnahme an 602
- 691, 692: Ausklinkung in 603
- 693, 694: Ausklinkung in 603

- 701: Gerüstbauteil
- 702: Gerüstrahmen
- 703: Hohlprofilstab
- 703a: oberen Rohrabschnitt von 703
- B1-703a: Bohrung in 703a
- B2-703a: Bohrung in 703a
- H703a: Hohlraum in 703
- 797, 798: Umformabschnitt von 703a
- 797a, 797b: Trennschlitz von 797
- 798a, 798b: Trennschlitz von 798

- y: Pfeilrichtung
- x: Pfeilrichtung
- z': Pfeilrichtung
- U: Untergrund

## Patentansprüche

1. **Reduzierhülse** (223, 224; 323; 423; 523) zum Einbau in ein Gerüstbauteil (101; 201; 301; 401), insbesondere in einen Hohlprofilstab (103; 203; 303; 403; 703) und vorzugsweise in einen Gerüstrahmen (102; 202; 702), welcher wenigsten einen Hohlprofilstab (103; 203) umfasst, wobei die Reduzierhülse (223, 224; 323; 423; 523) einen Hülsenkörper (225; 226; 325) mit einer zylindrischen Außenmantelfläche (AMF225; AMF 325) umfasst, dass die Reduzierhülse (223, 224; 323; 423; 523) wenigstens eine Rasteinrichtung (262, 263; 362, 363) umfasst, wobei die Rasteinrichtung (262, 263; 362, 363) eine Rastnase (262a, 263a; 362a, 363a) und eine Feder (262b, 263b; 362b, 363b) umfasst, wobei die Rastnase (262a, 263a; 362a, 363a) in einer Raststellung (R262, R263; R362, R363) nach außen über die Außenmantelfläche (AMF225; AMF325) übersteht und derart gefedert an dem Hülsenkörper (225; 226; 325) angeordnet ist, dass diese aus der Raststellung (R262, R263; R362, R363) derart weit gegen eine Rückstellkraft der Feder (262b, 263b; 362b, 363b) in den Hülsenkörper (225; 226; 325) eindrückbar ist, dass die Rastnase (262a, 263a; 362a, 363a) im Wesentlichen plan in der Außenmantelfläche (AMF225; AMF325) liegt,
**dadurch gekennzeichnet, dass**
die Feder (262b, 263b; 362b, 363b) der Rasteinrichtung (262, 263; 362, 363) durch einen ersten Rastabschnitt (271; 371) des Hülsenkörpers (225; 226; 325) gebildet ist, welcher längsseitig durch axial in Richtung einer Längsachse (L223; L323) des Hülsenkörpers (225; 226; 325) nebeneinander verlaufende Schnitte (271a, 271b; 371a, 371b) von einem Halteabschnitt (272; 372) des Hülsenkörpers (225; 226; 325) getrennt ist und querseitig mit dem Halteabschitt (272; 372) des Hülsenkörpers (225; 226; 325) verbunden ist, wobei die Rastnase (262a, 263a; 362a, 363a) mit dem Rastabschnitt (225; 271; 371) verbunden ist.

2. Reduzierhülse (223, 224; 323; 423; 523) nach Anspruch 1, **dadurch gekennzeichnet, dass** der Hülsenkörper (225; 226; 325) eine zylindrische Innenmantelfläche (IMF225; IMF325) aufweist, wobei die Rasteinrichtung (262, 263; 362, 363) derart ausgebildet ist, dass diese in der Raststellung (R262, R263; R362, R363) außerhalb eines durch die Innenmantelfläche (IMF225; IMF325) definierten Innenraums (225b; 226b; 325b) des Hülsenkörpers liegt (225; 226; 325), wobei die Rastnase (262a, 263a; 362a, 363a) insbesondere als Zylinder oder als Kreisring (K262a, K563a) oder als Gewindemutter (GWM362a) ausgebildet ist.

3. Reduzierhülse (223, 224; 323; 423; 523) nach einem der vorhergehenden Ansprüche, **dadurch gekennzeichnet, dass** die Reduzierhülse (223, 224; 323; 423; 523) wenigstens eine weitere, zweite Rasteinrichtung (262, 263; 362, 363) umfasst, wobei die erste und die zweite Rasteinrichtung (262, 263; 362, 363) gegenüberliegend angeordnet sind und dass die Reduzierhülse (223, 224; 323; 423; 523) insbesondere wenigstens eine erste Bohrung (B3-223) und vorzugsweise wenigstens eine weitere, zweite Bohrung (B4-223) umfasst, wobei die erste und die zweite Bohrung (B3-223; B4-223) insbesondere gegenüberliegend angeordnet sind.

4. Reduzierhülse (223, 224; 323; 423; 523) nach wenigstens einem der Ansprüche 1 bis 3, **dadurch gekennzeichnet, dass** die Reduzierhülse (223, 224; 323; 423; 523) als insbesondere einteiliges Bauteil und vorzugsweise als einteiliges Kunststoffbauteil ausgebildet ist.

5. **Rohrverbinder** (123, 124; 233; 234; 601) zum Einbau in ein Gerüstbauteil (101; 201; 301; 401), insbesondere in einen Hohlprofilstab (103; 104; 203; 204; 703) und vorzugsweise in einen Gerüstrahmen, welcher wenigsten einen Hohlprofilstab (103; 104; 203; 204; 703) umfasst,
- wobei der Rohrverbinder (123, 124; 233; 234; 601) eine Doppelhülse (241; 602) umfasst,
- wobei die Doppelhülse (241; 602) einen ersten, unteren Steckzapfen (233b; 633b) mit einer ersten zylindrischen Außenmantelfläche (AMF233b) mit einem ersten Außendurchmesser (D233b) umfasst und
- wobei die Doppelhülse (241; 602) einen zweiten, oberen Steckzapfen (233a) mit einer zweiten zylindrischen Außenmantelfläche (AMF233a) mit einem zweiten Außendurchmesser (D233a) umfasst,
- wobei der erste, untere Steckzapfen (233b; 633b) wenigstens eine Rasteinrichtung (242; 243) umfasst, wobei die Rasteinrichtung (242; 243) eine Rastnase (242a; 243a) und eine Feder (242b; 243b) umfasst, wobei die Rastnase (242a; 243a) in einer Raststellung (R242a; R243a) nach außen über die erste Außenmantelfläche (AMF233b) übersteht und derart gefedert an dem ersten, unteren Steckzapfen (233b; 633b) angeordnet ist, dass diese aus der Raststellung 8R242a; R243a) derart weit gegen eine Rückstellkraft der Feder (242b; 243b) in den ersten Steckzapfen (233b; 633b) eindrückbar ist, dass die Rastnase (242a; 243a) im Wesentlichen plan in der ersten Außenmantelfläche (AMF233b) liegt und
- wobei der erste, untere Steckzapfen (233b; 633b) einen Außendurchmesser (D233b) aufweist, welcher größer ist als ein Außendurchmesser (D233a) des zweiten, oberen Steckzapfens (233a)
**dadurch gekennzeichnet, dass**
die Feder (242b; 243b) der Rasteinrichtung (242; 243) durch einen Rastabschnitt (251) des unteren Steckzapfens (233b; 633b) der Doppelhülse (241; 602) gebildet ist, welcher längsseitig durch axial in Richtung einer Längsachse (L233) des Rohrverbinders (123, 124; 233; 234; 601) nebeneinander verlaufende Schnitte (251a; 251b) von einem Halteabschnitt (252) des unteren Steckzapfens (233b; 633b) getrennt ist und querseitig mit dem Halteabschnitt (252) des unteren Steckzapfens (233b; 633b) verbunden ist, wobei die Rastnase (242a; 243a) mit dem Rastabschnitt (251) verbunden ist.

6. Rohrverbinder (123, 124; 233; 234; 601) nach Anspruch 5, **dadurch gekennzeichnet, dass** der erste, untere Steckzapfen (233b; 633b) der Doppelhülse (241; 602) wenigstens eine weitere, zweite Rasteinrichtung (243) umfasst, wobei die erste und die zweite Rasteinrichtung (242; 243) gegenüberliegend angeordnet sind und dass der zweite, obere Steckzapfen (233a) des Rohrverbinders (123, 124; 233; 234; 601) insbesondere wenigstens eine erste Bohrung (B3-233a) und vorzugsweise wenigstens eine weitere, zweite Bohrung (B4-233a) umfasst, wobei die erste und die zweite Bohrung (B3-233a; B4-233a) insbesondere gegenüberliegend angeordnet sind.

7. Rohrverbinder (123, 124; 233; 234; 601) nach wenigstens einem der Ansprüche 5 oder 6, **dadurch gekennzeichnet, dass** der erste, untere Steckzapfen (233b; 633b) der Doppelhülse (241; 602) als rohrartiger Steckzapfen mit einem zylindrischen Innenraum oder als dornartiger Steckzapfen aus Vollmaterial ausgebildet ist und dass der zweite, obere Steckzapfen (233a) des Rohrverbinders (123, 124; 233; 234; 601) als rohrartiger Steckzapfen mit einem zylindrischen Innenraum oder als dornartiger Steckzapfen aus Vollmaterial ausgebildet ist.

8. Rohrverbinder (123, 124; 233; 234; 601) nach wenigstens einem der Ansprüche 5 bis 7, **dadurch gekennzeichnet, dass** der erste, untere Steckzapfen (633b) der Doppelhülse (602) an seiner Außenmantelfläche (AMF633b) wenigstens eine Aufnahme (681; 682) und insbesondere zwei sich gegenüberliegende Aufnahmen (681; 682) umfasst.

9. Rohrverbinder (123, 124; 233; 234; 601) nach wenigstens einem der Ansprüche 5 bis 8, **dadurch gekennzeichnet, dass** die Doppelhülse (602) entweder als insbesondere einteiliges Bauteil und vorzugsweise einteiliges Kunststoffbauteil ausgebildet ist oder dass der Rohrverbinder (601) zusätzlich zu der insbesondere als einteiliges Bauteil, vorzugsweise einteiliges Kunststoffbauteil ausgeführten Doppelhülse (602) eine Kernhülse (603) umfasst, wobei sich die Kernhülse (603) mit ihrer Länge (L603) insbesondere über eine Länge (L602) der Doppelhülse (602) erstreckt, wobei die Kernhülse (603) insbesondere als Metallhülse ausgebildet ist, wobei die Kernhülse (603) insbesondere reibschlüssig mit der eine Außenhülse bildenden Doppelhülse (602) verbunden ist.

10. Rohrverbinder (123, 124; 233; 234; 601) nach Anspruch 9, **dadurch gekennzeichnet, dass** die Kernhülse (603) im Bereich jeder Rasteinrichtung (642; 643) der Doppelhülse (602) eine Ausklinkung (691; 692) aufweist, wobei die Ausklinkung (691; 692) derart bemessen ist, dass die Rasteinrichtung (642; 643) in Richtung einer Längsachse (L601) des Rohrverbinders (601) verformbar ist und dass es insbesondere vorgesehen ist, dass die Kernhülse (603) im Bereich jeder Bohrung (B3-633a; B4-633a) der Doppelhülse (602) eine weitere Ausklinkung (693; 694) aufweist, wobei die Ausklinkung (693; 694) vorzugsweise als Durchgangsbohrung oder als Gewindebohrung ausgebildet ist.

11. **Verbindungssystem** umfassend wenigstens ein erstes Einbauteil (121; 122) und wenigstens ein zweites Einbauteil (221; 222), wobei das Verbindungssystem zur Verbindung eines ersten, unteren Gerüstbauteils (101) und eines zweiten, oberen Gerüstbauteils (201), insbesondere eines unteren Hohlprofilstabs (103; 104) und eines oberen Hohlprofilstabs (203; 204) und vorzugsweise eines ersten Gerüstrahmens (102), welcher wenigstens einen Hohlprofilstab (103; 104) umfasst, und eines zweiten Gerüstrahmens (202), welcher wenigstens einen Hohlprofilstab (203; 204) umfasst, vorgesehen ist, **dadurch gekennzeichnet, dass** das erste Einbauteil (121; 122) als Rohrverbinder (123, 124) ausgebildet ist und in das untere Gerüstbauteil (101) einbaubar ist, dass das zweite Einbauteil (221; 222) als Reduzierhülse (223, 224) ausgebildet ist und in das obere Gerüstbauteil (201) einbaubar ist, dass die Reduzierhülse (223, 224) insbesondere nach wenigstens einem der Ansprüche 1 bis 4 ausgebildet ist, dass der Rohrverbinder (123, 124) nach wenigstens einem der Ansprüche 5 bis 10 ausgebildet ist und dass der Rohrverbinder (123, 124) in die Reduzierhülse (223, 224) einsteckbar ist.

12. **Gerüstbauteil** (101; 201; 301; 401), insbesondere Hohlprofilstab (103; 104; 203; 204; 703) oder Gerüstrahmen mit wenigstens einem Hohlprofilstab (103; 104; 203; 204; 703), **dadurch gekennzeichnet,**
- **dass** das Gerüstbauteil (101; 201; 301; 401) einen oberen Rohrabschnitt (103a; 104a; 203a; 204a) und einen unteren Rohrabschnitt (103b; 104b; 203b; 204b) umfasst,
- **dass** das Gerüstbauteil (101; 201; 301; 401) weiterhin eine Reduzierhülse (223, 224; 323; 423; 523) nach wenigstens einem der Ansprüche 1 bis 4 umfasst und/oder dass das Gerüstbauteil (101; 201; 301; 401) einen Rohrverbinder (123, 124; 233; 234; 601) nach wenigstens einem der Ansprüche 5 bis 10 umfasst,
- **dass** an dem oberen Rohrabschnitt (103a; 104a; 203a; 204a) wenigstens eine Bohrung (B1-204a; B2-204a) angeordnet ist, in welche eine Rastnase (242a; 243a) des Rohrverbinders (123, 124; 233; 234; 601) eingerastet ist und/oder dass an dem unteren Rohrabschnitt (103b; 104b; 203b; 204b) wenigstens eine Bohrung (B1-204b; B2-204b) angeordnet ist, in welche eine Rastnase (262a; 263a) der Reduzierhülse (223, 224; 323; 423; 523) eingerastet ist und
- **dass** es insbesondere auch vorgesehen ist, dass an dem oberen Rohrabschnitt (703a) durch sich gegenüberliegende und radial verlaufende Trennschlitze (797a; 797b; 798a; 798b), welche den oberen Rohrabschnitt (703a) durchtrennen, ein insbesondere kreisringabschnittähnlicher Umformabschnitt (797; 798) ausgebildet ist, welcher durch eine Presskraft derart plastisch umgeformt und hierbei flach gedrückt ist, dass der umgeformte Umformabschnitt (797; 798) in einen Hohlraum (H703a) des oberen Rohrabschnitts (703a) und eine Aufnahme (681; 682) der Reduzierhülse (223, 224; 323; 423; 523) ragt.

13. **Gerüstsystem** umfassend wenigsten ein erstes Gerüstbauteil (101; 201; 301; 401), insbesondere einen Hohlprofilstab (103; 104; 203; 204; 703) oder einen Gerüstrahmen (102; 202) mit wenigstens einem Hohlprofilstab (103; 104; 203; 204; 703) und wenigstens ein zweites Gerüstbauteil (101; 201; 301; 401), insbesondere einen Hohlprofilstab (103; 104; 203; 204; 703) oder einen Gerüstrahmen mit wenigstens einem Hohlprofilstab (103; 104; 203; 204; 703), wobei das erste Gerüstbauteil (101) wenigstens ein erstes Einbauteil (121; 122) umfasst, und wobei das zweite Gerüstbauteil (201) wenigstens ein zweites Einbauteil (221; 222) umfasst, **dadurch gekennzeichnet,**
- **dass** das zweite Einbauteil (221; 222) als Reduzierhülse (223, 224; 323; 423; 523) ausgebildet ist und insbesondere nach wenigstens einem der Ansprüche 1 bis 4 ausgebildet ist und dass das erste Einbauteil (121; 1222) als Rohrverbinder (123, 124; 233; 234; 601) ausgebildet ist und nach wenigstens einem der Ansprüche 5 bis 10 ausgebildet ist,
- **dass** der Rohrverbinder (123, 124) in einer endseitigen, oberen Öffnung des Hohlprofilstabs (103; 104) des ersten, unteren Gerüstbauteils (101) aufgenommen ist und mit diesem verrastet ist und dass die Reduzierhülse (223, 224) in einer endseitigen, unteren Öffnung des Hohlprofilstabs (203; 204) des zweiten, oberen Gerüstbauteils (201) aufgenommen ist und mit diesem verrastet ist,
- **dass** der erste, untere Gerüstbauteil (101) mit einem oberen Steckzapfen (233a) des Rohrverbinders (233; 234;) in einen Innenraum (226b) der mit dem zweiten, oberen Gerüstbauteil (201) verbundenen Reduzierhülse (223, 224) einsteckbar ist und dass das Gerüstsystem insbesondere derart ausgebildet ist, dass wenigstens zwei der Gerüstbauteile (101; 201) nach Anspruch 12 ausgebildet sind.

14. Gerüstsystem nach Anspruch 13, **dadurch gekennzeichnet, dass** das erste Gerüstbauteil (101) als erster Gerüstrahmen (102) ausgebildet ist und dass das zweite Gerüstbauteil (201) als zweiter Gerüstrahmens (202) ausgebildet ist.

15. Gerüstsystem nach Anspruch 13 oder 14, **dadurch gekennzeichnet, dass** der erste Gerüstrahmen (102) einen zweiten Hohlprofilstab (104) umfasst, wobei in einer endseitigen Öffnung des zweiten Hohlprofilstabs (104) des ersten, unteren Gerüstrahmens (102) ein zweiter Rohrverbinder (124) aufgenommen und mit dem zweiten Hohlprofilstab (104) des ersten, unteren Gerüstrahmens (102) verrastet und insbesondere formschlüssig verbunden ist, dass der zweite Gerüstrahmen (202) einen zweiten Hohlprofilstab (204) umfasst, wobei in einer endseitigen Öffnung des zweiten Hohlprofilstabs (204) des zweiten, oberen Gerüstrahmens (202) eine zweite Reduzierhülse (224) aufgenommen und mit dem zweiten Hohlprofilstab (204) des zweiten, oberen Gerüstrahmens 202) verrastet ist.

16. Gerüstsystem nach wenigsten einem der Ansprüche 13 bis 15, **dadurch gekennzeichnet, dass** jeder Hohlprofilstab (103; 104; 203; 204; 703) wenigstens eine Bohrung (B1-204a; B2-204a; B1-204b; B2-204b) zur Aufnahme einer Rastnase (242a; 243a; 262a; 263a) einer Rasteinrichtung (242; 243; 262; 263) der Reduzierhülse (223, 224; 323; 423; 523) bzw. des Rohrverbinders (123, 124; 233; 234; 601) aufweist.

17. Gerüstsystem nach wenigstens einem der Ansprüche 13 bis 16, **dadurch gekennzeichnet,**
- **dass** die Reduzierhülse (223, 224; 323; 423; 523) mit ihrem Außendurchmesser und der untere Rohrabschnitt (103b; 104b; 203b; 204b) des Hohlprofilsstabs (103; 104; 203; 204) mit seinem Innendurchmesser nach der Art einer Gleit-Schiebe-Passung aufeinander abgestimmt sind,
- **dass** der Rohrverbinder (123, 124; 233; 234; 601) mit einem Außendurchmesser (D233b) seines unteren Steckzapfens (233b) und der obere Rohrabschnitt (103a; 104a; 203a; 204a) des Hohlprofilstabs (103; 104; 203; 204; 703) mit seinem Innendurchmesser nach Art einer Gleit-Schiebe-Passung aufeinander abgestimmt sind und
- **dass** der Rohrverbinder (123, 124; 233; 234; 601) mit einem Außendurchmesser (D233a) seines oberen Steckzapfens (233a) und die Reduzierhülse (223, 224; 323; 423; 523) mit ihrem Innendurchmesser nach Art einer Gleit-Schiebe-Passung aufeinander abgestimmt sind.

18. Gerüstsystem nach wenigstens einem der Ansprüche 13 bis 17, **dadurch gekennzeichnet, dass** der obere Gerüstrahmen unter Zwischenlage der ersten und der zweiten Reduzierhülse (223; 244) und des ersten und des zweiten Rohrverbinders (123; 124) zwischen dem ersten und zweiten Hohlprofilstab (103; 104) des unteren Gerüstrahmens (102) und dem ersten und zweiten Hohlprofilstabs (203; 204) des oberen Gerüstrahmens (202) derart zusammengesteckt sind,
- dass der erste Rohrverbinder (123) mit seinem unteren Steckzapfen in das erste Hohlprofil (103) des unteren Gerüstrahmens (102) eingesteckt ist und mit seinem oberen Steckzapfen in die mit dem ersten Hohlprofil (203) des oberen Gerüstrahmen (202) verbundene erste, obere Reduzierhülse (223) eingesteckt ist und
- dass der zweite Rohrverbinder (124) mit seinem unteren Steckzapfen in das zweite Hohlprofil (104) des unteren Gerüstrahmens (102) eingesteckt ist und mit seinem oberen Steckzapfen in die mit dem zweiten Hohlprofil (204) des oberen Gerüstrahmen (202) verbundene zweite, obere Reduzierhülse (224) eingesteckt ist.

19. **Verfahren zur Herstellung eines Gerüstbauteils** (701), insbesondere eines Hohlprofilstabs (703) oder eines Gerüstrahmens (702), welcher wenigstens einen Hohlprofilstab (703) umfasst, wobei das Gerüstbauteil (701) einen Rohrverbinder (601) nach wenigstens einem der Ansprüche 5 bis 10 umfasst, umfassend die Schritte:
- Einbringen von sich gegenüberliegenden und radial verlaufenden Trennschlitzen (797a; 797b; 798a; 798b) an einem oberen Rohrabschnitt (703a) des Hohlprofilstabs (703) des Gerüstbauteils (701), wobei der obere Rohrabschnitt (703a) von den Trennschlitzen (797a; 797b; 798a; 798b) durchtrennt wird, und ein insbesondere kreisringabschnittähnlicher Umformabschnitt (797; 798) ausgebildet wird,
- Einstecken des Rohrverbinders (601) in eine endseitige Öffnung des Hohlprofilstabs (703) derart, dass eine Rasteinrichtung (642; 643) des Rohrverbinders (601) mit einer Rastnase (642a; 643a) in eine Bohrung (B1-703a; B2-703a) des Hohlprofilstabs (103; 104; 203; 204; 703) einrastet und
- plastisches Eindrücken des Umformabschnitts (797; 798), derart dass der umgeformte Mantelbereich in einen Hohlraum (H703a) des oberen Rohrabschnitts (703a) und in eine Aufnahme (681; 682) des Rohrverbinders (601) ragt.

## Claims

1. **Reducing sleeve** (223, 224; 323; 423; 523) for installing into a scaffold component (101; 201; 301; 401), in particular into a hollow-profile rod (103; 203; 303; 403; 703) and preferably into a scaffold frame (102; 202; 702) which comprises at least one hollow-profile rod (103; 203), wherein the reducing sleeve (223, 224; 323; 423; 523) comprises a sleeve body (225; 226; 325) having a cylindrical outer lateral surface (AMF225; AMF325), wherein the reducing sleeve (223, 224; 323; 423; 523) comprises at least one latching device (262, 263; 362, 363), wherein the latching device (262, 263; 362, 363) comprises a latching lug (262a, 263a; 362a, 363a) and a spring (262b, 263b; 362b, 363b), wherein, in a latching position (R262, R263; R362, R363), the latching lug (262a, 263a; 362a, 363a) projects outwardly beyond the outer lateral surface (AMF225; AMF325) and is arranged spring-mounted on the sleeve body (225; 226; 325) in such a way that it can be pressed out of the latching position (R262, R263; R362, R363) into the sleeve body (225; 226; 325) against a restoring force of the spring (262b, 263b; 362b, 363b) to such an extent that the latching lug (262a, 263a; 362a, 363a) lies substantially flat in the outer lateral surface (AMF225; AMF325),
**characterized in that**
the spring (262b, 263b; 362b, 363b) of the latching device (262, 263; 362, 363) is formed by a first latching portion (271; 371) of the sleeve body (225; 226; 325) that is separated from a holding portion (272; 372) of the sleeve body (225; 226; 325) on the longitudinal sides by cuts (271a, 271b; 371a, 371b) extending next to one another axially in the direction of a longitudinal axis (L223; L323) of the sleeve body (225; 226; 325) and is connected on the transverse sides to the holding portion (272; 372) of the sleeve body (225; 226; 325), wherein the latching lug (262a, 263a; 362a, 363a) is connected to the latching portion (225; 271; 371).

2. Reducing sleeve (223, 224; 323; 423; 523) according to Claim 1, **characterized in that** the sleeve body (225; 226; 325) has a cylindrical inner lateral surface (IMF225; IMF325), wherein the latching device (262, 263; 362, 363) is designed in such a way that, in the latching position (R262, R263; R362, R363), it is situated outside an interior (225b; 226b; 325b) of the sleeve body (225; 226; 325) that is defined by the inner lateral surface (IMF225; IMF325), wherein the latching lug (262a, 263a; 362a, 363a) is designed in particular as a cylinder or as a circular ring (K262a, K563a) or as a threaded nut (GWM362a).

3. Reducing sleeve (223, 224; 323; 423; 523) according to either of the preceding claims, **characterized in that** the reducing sleeve (223, 224; 323; 423; 523) comprises at least one further, second latching device (262, 263; 362, 363), wherein the first and the second latching device (262, 263; 362, 363) are arranged opposite one another, and **in that** the reducing sleeve (223, 224; 323; 423; 523) comprises in particular at least one first bore (B3-223) and preferably at least one further, second bore (B4-223), wherein the first and the second bore (B3-223; B4-223) are arranged in particular to be opposite one another.

4. Reducing sleeve (223, 224; 323; 423; 523) according to at least one of Claims 1 to 3, **characterized in that** the reducing sleeve (223, 224; 323; 423; 523) is designed as, in particular, a one-piece component and preferably as a one-piece plastics component.

5. **Tube connector** (123, 124; 233; 234; 601) for installing into a scaffold component (101; 201; 301; 401), in particular into a hollow-profile rod (103; 104; 203; 204; 703) and preferably into a scaffold frame which comprises at least one hollow-profile rod (103; 104; 203; 204; 703),
- wherein the tube connector (123, 124; 233; 234; 601) comprises a double sleeve (241; 602),
- wherein the double sleeve (241; 602) comprises a first, lower spigot (233b; 633b) having a first cylindrical outer lateral surface (AMF233b) with a first outside diameter (D233b), and
- wherein the double sleeve (241; 602) comprises a second, upper spigot (233a) having a second cylindrical outer lateral surface (AMF233a) with a second outside diameter (D233a),
- wherein the first, lower spigot (233b; 633b) comprises at least one latching device (242; 243), wherein the latching device (242, 243) comprises a latching lug (242a; 243a) and a spring (242b; 243b), wherein, in a latching position (R242a; R243a), the latching lug (242a; 243a) projects outwardly beyond the first outer lateral surface (AMF233b) and is arranged spring-mounted on the first, lower spigot (233b; 633b) in such a way that it can be pressed out of the latching position (R242a; R243a) into the first spigot (233b; 633b) against a restoring force of the spring (242b; 243b) to such an extent that the latching lug (242a; 243a) lies substantially flat in the first outer lateral surface (AMF233b), and
- wherein the first, lower spigot (233b; 633b) has an outside diameter (D233b) which is larger than an outside diameter (D233a) of the second, upper spigot (233a), **characterized in that**
the spring (242b; 243b) of the latching device (242; 243) is formed by a latching portion (251) of the lower spigot (233b; 633b) of the double sleeve (241; 602) that is separated from a holding portion (252) of the lower spigot (233b; 623b) on the longitudinal sides by cuts (251a; 251b) extending next to one another axially in the direction of a longitudinal axis (L233) of the tube connector (123, 124; 233; 234; 601) and is connected on the transverse sides to the holding portion (252) of the lower spigot (233b; 633b), wherein the latching lug (242a; 243a) is connected to the latching portion (251).

6. Tube connector (123, 124; 233; 234; 601) according to Claim 5, **characterized in that** the first, lower spigot (233b; 633b) of the double sleeve (241; 602) comprises at least one further, second latching device (243), wherein the first and the second latching device (242; 243) are arranged opposite one another, and **in that** the second, upper spigot (233a) of the tube connector (123, 124; 233; 234; 601) comprises in particular at least one first bore (B3-233a) and preferably at least one further, second bore (B4-233a), wherein the first and second bore (B3-233a; B4-233a) are arranged in particular to be opposite one another.

7. Tube connector (123, 124; 233; 234; 601) according to at least one of Claims 5 and 6, **characterized in that** the first, lower spigot (233b; 633b) of the double sleeve (241; 602) is designed as a tube-like spigot having a cylindrical interior or as a pin-like spigot of solid material, and **in that** the second, upper spigot (233a) of the tube connector (123, 124; 233; 234; 601) is designed as a tube-like spigot having a cylindrical interior or as a pin-like spigot of solid material.

8. Tube connector (123, 124; 233; 234; 601) according to at least one of Claims 5 to 7, **characterized in that** the first, lower spigot (633b) of the double sleeve (602) comprises on its outer lateral surface (AMF633b) at least one receptacle (681; 682) and in particular two mutually opposite receptacles (681; 682).

9. Tube connector (123, 124; 233; 234; 601) according to at least one of Claims 5 to 8, **characterized in that** the double sleeve (602) is designed either as, in particular, a one-piece component and preferably as a one-piece plastics component, or **in that** the tube connector (601) comprises a core sleeve (603) in addition to the double sleeve (602) configured in particular as a one-piece component, preferably a one-piece plastics component, wherein the core sleeve (603) extends with its length (L603) in particular over a length (L602) of the double sleeve (602), wherein the core sleeve (603) is designed in particular as a metal sleeve, wherein the core sleeve (603) is connected, in particular frictionally, to the double sleeve (602) forming an outer sleeve.

10. Tube connector (123, 124; 233; 234; 601) according to Claim 9, **characterized in that** the core sleeve (603) has a cutout (691; 692) in the region of each latching device (642; 643) of the double sleeve (602), wherein the cutout (691; 692) is dimensioned in such a way that the latching device (642; 643) is deformable in the direction of a longitudinal axis (L601) of the tube connector (601), and **in that** there is provision in particular that the core sleeve (603) has a further cutout (693; 694) in the region of each bore (B3-633a; B4-633a) of the double sleeve (602), wherein the cutout (693; 694) is preferably designed as a through-bore or as a threaded bore.

11. **Connection system** comprising at least one first installation part (121; 122) and at least one second installation part (221; 222), wherein the connection system is provided for connecting a first, lower scaffold component (101) and a second, upper scaffold component (201), in particular a lower hollow-profile rod (103; 104) and an upper hollow-profile rod (203; 204) and preferably a first scaffold frame (102), which comprises at least one hollow-profile rod (103; 104), and a second scaffold frame (202), which comprises at least one hollow-profile rod (203; 204), **characterized in that** the first installation part (121; 122) is designed as a tube connector (123, 124) and can be installed into the lower scaffold component (101), **in that** the second installation part (221; 222) is designed as a reducing sleeve (223, 224) and can be installed into the upper scaffold component (201), **in that** the reducing sleeve (223, 224) is designed in particular according to at least one of Claims 1 to 4, **in that** the tube connector (123, 124) is designed according to at least one of Claims 5 to 10, and **in that** the tube connector (123, 124) can be plugged into the reducing sleeve (223, 224).

12. **Scaffold component** (101; 201; 301; 401), in particular a hollow-profile rod (103; 104; 203; 204; 703) or scaffold frame having at least one hollow-profile rod (103; 104; 203; 204; 703), **characterized**
- **in that** the scaffold component (101; 201; 301; 401) comprises an upper tube portion (103a; 104a; 203a; 204a) and a lower tube portion (103b; 104b; 203b; 204b),
- **in that** the scaffold component (101; 201; 301; 401) further comprises a reducing sleeve (223, 224; 323; 423; 523) according to at least one of Claims 1 to 4, and/or in that the scaffold component (101; 201; 301; 401) comprises a tube connector (123, 124; 233; 234; 601) according to at least one of Claims 5 to 10,
- **in that** at least one bore (B1-204a; B2-204a), into which a latching lug (242a; 243a) of the tube connector (123, 124; 233; 234; 601) is latched, is arranged on the upper tube portion (103a; 104a; 203a; 204a), and/or in that at least one bore (B1-204b; B2-204b), into which a latching lug (262a; 263a) of the reducing sleeve (223, 224; 323; 423; 523) is latched, is arranged on the lower tube portion (103b; 104b; 203b; 204b), and
- **in that** there is in particular also provision that a deformation portion (797; 798), which is in particular similar to a circular ring portion, is formed on the upper tube portion (703a) by means of opposite and radially extending separating slits (797a; 797b; 798a; 798b) cutting through the upper tube portion (703a) and, as a result of a pressing force, is plastically deformed and thereby pressed flat in such a way that the deformed deformation portion (797; 798) projects into a cavity (H703a) of the upper tube portion (703a) and into a receptacle (681; 682) of the reducing sleeve (223, 224; 323; 423; 523).

13. **Scaffold system** comprising at least one first scaffold component (101; 201; 301; 401), in particular a hollow-profile rod (103; 104; 203; 204; 703) or a scaffold frame (102; 202) having at least one hollow-profile rod (103; 104; 203; 204; 703), and at least one second scaffold component (101; 201; 301; 401), in particular a hollow-profile rod (103; 104; 203; 204; 703) or a scaffold frame having at least one hollow-profile rod (103; 104; 203; 204; 703), wherein the first scaffold component (101) comprises at least one first installation part (121; 122), and wherein the second scaffold component (201) comprises at least one second installation part (221; 222), **characterized**
- **in that** the second installation part (221; 222) is designed as a reducing sleeve (223, 224; 323; 423; 523) and is designed in particular according to at least one of Claims 1 to 4, and in that the first installation part (121; 1222) is designed as a tube connector (123, 124; 233; 234; 601) and is designed according to at least one of Claims 5 to 10,
- **in that** the tube connector (123, 124) is received in an end-side, upper opening of the hollow-profile rod (103; 104) of the first, lower scaffold component (101) and is latched therewith, and in that the reducing sleeve (223, 224) is received in an end-side, lower opening of the hollow-profile rod (203; 204) of the second, upper scaffold component (201) and is latched therewith,
- **in that** the first, lower scaffold component (101) can be plugged with an upper spigot (223a) of the tube connector (233; 234) into an interior (226b) of the reducing sleeve (223, 224) connected to the second, upper scaffold component (201), and in that the scaffold system is designed in particular in such a way that at least two of the scaffold components (101; 201) are designed according to Claim 12.

14. Scaffold system according to Claim 13, **characterized in that** the first scaffold component (101) is designed as a first scaffold frame (102), and **in that** the second scaffold component (201) is designed as a second scaffold frame (202).

15. Scaffold system according to Claim 13 or 14, **characterized in that** the first scaffold frame (102) comprises a second hollow-profile rod (104), wherein a second tube connector (124) is received in an end-side opening of the second hollow-profile rod (104) of the first, lower scaffold frame (102) and is latched with, and in particular connected in a form-fitting manner to, the second hollow-profile rod (104) of the first, lower scaffold frame (102), **in that** the second scaffold frame (202) comprises a second hollow-profile rod (204), wherein a second reducing sleeve (224) is received in an end-side opening of the second hollow-profile rod (204) of the second, upper scaffold frame (202) and latched with the second hollow-profile rod (204) of the second, upper scaffold frame (202).

16. Scaffold system according to at least one of Claims 13 to 15, **characterized in that** each hollow-profile rod (103; 104; 203; 204; 703) has at least one bore (B1-204a; B2-204a; B1-204b; B2-204b) for receiving a latching lug (242a; 243a; 262a; 263a) of a latching device (242; 243; 262; 263) of the reducing sleeve (223, 224; 323; 423; 523) or of the tube connector (123, 124; 233; 234; 601).

17. Scaffold system according to at least one of Claims 13 to 16, **characterized**
- **in that** the reducing sleeve (223, 224; 323; 423; 523) with its outside diameter and the lower tube portion (103b; 104b; 203b; 204b) of the hollow-profile rod (103; 104; 203; 204) with its inside diameter are tailored to one another in the manner of a sliding push fit,
- **in that** the tube connector (123, 124; 233; 234; 601) with an outside diameter (D233b) of its lower spigot (233b) and the upper tube portion (103a; 104a; 203a; 204a) of the hollow-profile rod (103; 104; 203; 204; 703) with its inside diameter are tailored to one another in the manner of a sliding push fit, and
- **in that** the tube connector (123, 124; 233; 234; 601) with an outside diameter (D233a) of its upper spigot (233a) and a reducing sleeve (223, 224; 323; 423; 523) with its inside diameter are tailored to one another in the manner of a sliding push fit.

18. Scaffold system according to at least one of Claims 13 to 17, **characterized in that** the upper scaffold frame are plugged together with interposition of the first and the second reducing sleeve (223; 224) and of the first and the second tube connector (123; 124) between the first and second hollow-profile rod (103; 104) of the lower scaffold frame (102) and the first and second hollow-profile rod (203; 204) of the upper scaffold frame (202) in such a way
- that the first tube connector (123) is plugged with its lower spigot into the first hollow profile (103) of the lower scaffold frame (102) and is plugged with its upper spigot into the first, upper reducing sleeve (223) connected to the first hollow profile (203) of the upper scaffold frame (202), and
- that the second tube connector (124) is plugged with its lower spigot into the second hollow profile (104) of the lower scaffold frame (102) and is plugged with its upper spigot into the second, upper reducing sleeve (224) connected to the second hollow profile (204) of the upper scaffold frame (202).

19. **Method for producing a scaffold component** (701), in particular a hollow-profile rod (703) or a scaffold frame (702) which comprises at least one hollow-profile rod (703), wherein the scaffold component (701) comprises a tube connector (601) according to at least one of Claims 5 to 10, comprising the following steps:
- incorporating opposite and radially extending separating slits (797a; 797b; 798a; 798b) on an upper tube portion (703a) of the hollow-profile rod (703) of the scaffold component (701), wherein the upper tube portion (703a) is cut through by the separating slits (797a; 797b; 798a; 798b), and a deformation portion (797; 798), which is similar in particular to a circular ring portion, is formed,
- plugging the tube connector (601) into an end-side opening of the hollow-profile rod (703) in such a way that a latching device (642; 643) of the tube connector (601) latches with a latching lug (642a; 643a) into a bore (B1-703a; B2-703a) of the hollow-profile rod (103; 104; 203; 204; 703), and
- plastically pressing in the deformation portion (797; 798) in such a way that the deformed lateral region projects into a cavity (H703a) of the upper tube portion (703a) and into a receptacle (681; 682) of the tube connector (601).

## Revendications

1. Manchon de réduction (223, 224 ; 323 ; 423 ; 523) destiné à être installé dans un composant d'échafaudage (101 ; 201 ; 301 ; 401), en particulier dans une barre profilée creuse (103 ; 203 ; 303 ; 403 ; 703) et de préférence dans un cadre d'échafaudage (102 ; 202 ; 702), lequel comporte au moins une barre profilée creuse (103 ; 203), le manchon de réduction (223, 224 ; 323 ; 423 ; 523) comportant un corps de manchon (225 ; 226 ; 325) doté d'une surface d'enveloppe extérieure cylindrique (AMF225 ; AMF 325), le manchon de réduction (223, 224 ; 323 ; 423 ; 523) comportant au moins un dispositif d'encliquetage (262, 263 ; 362, 363), le dispositif d'encliquetage (262, 263 ; 362, 363) comportant un ergot d'encliquetage (262a, 263a ; 362a, 363a) et un ressort (262b, 263b ; 362b, 363b), l'ergot d'encliquetage (262a, 263a ; 362a, 363a), dans une position d'encliquetage (R262, R263 ; R362, R363), dépassant vers l'extérieur au-delà de la surface d'enveloppe extérieure (AMF225 ; AMF325) et étant disposé de manière sollicitée par ressort sur le corps de manchon (225 ; 226 ; 325), de telle sorte qu'il peut être enfoncé dans le corps de manchon (225 ; 226 ; 325) à partir de la position d'encliquetage (R262, R263 ; R362, R363) à l'encontre d'une force de rappel du ressort (262b, 263b ; 362b, 363b), dans une mesure telle que l'ergot d'encliquetage (262a, 263a ; 362a, 363a) se situe sensiblement de manière plane dans la surface d'enveloppe extérieure (AMF225 ; AMF325),
**caractérisé en ce que**
le ressort (262b, 263b ; 362b, 363b) du dispositif d'encliquetage (262, 263 ; 362, 363) est formé par une première partie d'encliquetage (271 ; 371) du corps de manchon (225 ; 226 ; 325), laquelle est séparée, du côté longitudinal, d'une partie de retenue (272 ; 372) du corps de manchon (225 ; 226 ; 325) par des entailles (271a, 271b ; 371a, 371b) s'étendant les unes à côté des autres axialement dans la direction d'un axe longitudinal (L223 ; L323) du corps de manchon (225 ; 226 ; 325) et est raccordée à la partie de retenue (272 ; 372) du corps de manchon (225 ; 226 ; 325) du côté transversal, l'ergot d'encliquetage (262a, 263a ; 362a, 363a) étant raccordé à la partie d'encliquetage (225 ; 271 ; 371).

2. Manchon de réduction (223, 224 ; 323 ; 423 ; 523) selon la revendication 1, **caractérisé en ce que** le corps de manchon (225 ; 226 ; 325) comprend une surface d'enveloppe intérieure cylindrique (IMF225 ; IMF325), le dispositif d'encliquetage (262, 263 ; 362, 363) étant réalisé de telle sorte que celui-ci se situe, dans la position d'encliquetage (R262, R263 ; R362, R363), à l'extérieur d'un espace intérieur (225b ; 226b ; 325b) du corps de manchon (225 ; 226 ; 325) défini par la surface d'enveloppe intérieure (IMF225 ; IMF325), l'ergot d'encliquetage (262a, 263a ; 362a, 363a) étant réalisé en particulier comme cylindre ou comme anneau circulaire (K262a, K563a) ou comme écrou fileté (GWM362a).

3. Manchon de réduction (223, 224 ; 323 ; 423 ; 523) selon l'une des revendications précédentes, **caractérisé en ce que** le manchon de réduction (223, 224 ; 323 ; 423 ; 523) comporte au moins un autre, deuxième, dispositif d'encliquetage (262, 263 ; 362, 363), le premier et le deuxième dispositif d'encliquetage (262, 263 ; 362, 363) étant disposés en regard l'un de l'autre, et **en ce que** le manchon de réduction (223, 224 ; 323 ; 423 ; 523) comporte particulier au moins un premier alésage (B3-223) et de préférence au moins un autre, deuxième, alésage (B4-223), le premier et le deuxième alésage (B3-223 ; B4-223) étant disposés en particulier en regard l'un de l'autre.

4. Manchon de réduction (223, 224 ; 323 ; 423 ; 523) selon au moins l'une des revendications 1 à 3, **caractérisé en ce que** le manchon de réduction (223, 224 ; 323 ; 423 ; 523) est réalisé comme composant en particulier d'une seule pièce et de préférence comme composant en matière synthétique d'une seule pièce.

5. Raccord de tubes (123, 124 ; 233 ; 234 ; 601) destiné à être installé dans un composant d'échafaudage (101 ; 201 ; 301 ; 401), en particulier dans une barre profilée creuse (103 ; 104 ; 203 ; 204 ; 703) et de préférence dans un cadre d'échafaudage, lequel comporte au moins une barre profilée creuse (103 ; 104 ; 203 ; 204 ; 703),
- le raccord de tubes (123, 124 ; 233 ; 234 ; 601) comportant un manchon double (241 ; 602),
- le manchon double (241 ; 602) comportant un premier axe d'enfichage inférieur (233b ; 633b) doté d'une première surface d'enveloppe extérieure cylindrique (AMF233b) présentant un premier diamètre extérieur (D233b) et
- le manchon double (241 ; 602) comportant un deuxième axe d'enfichage supérieur (233a) doté d'une deuxième surface d'enveloppe extérieure cylindrique (AMF233a) présentant un deuxième diamètre extérieur (D233a),
- le premier axe d'enfichage inférieur (233b ; 633b) comportant au moins un dispositif d'encliquetage (242 ; 243), le dispositif d'encliquetage (242 ; 243) comportant un ergot d'encliquetage (242a ; 243a) et un ressort (242b ; 243b), l'ergot d'encliquetage (242a ; 243a), dans une position d'encliquetage (R242a ; R243a), dépassant vers l'extérieur au-delà de la première surface d'enveloppe extérieure (AMF233b) et étant disposé de manière sollicitée par ressort sur le premier axe d'enfichage inférieur (233b ; 633b) de telle sorte qu'il peut être enfoncé dans le premier axe d'enfichage (233b ; 633b) à partir de la position d'encliquetage (R242a ; R243a) à l'encontre d'une force de rappel du ressort (242b ; 243b) dans une mesure telle que l'ergot d'encliquetage (242a ; 243a) se situe sensiblement de manière plane dans la première surface d'enveloppe extérieure (AMF233b) et
- le premier axe d'enfichage inférieur (233b ; 633b) présentant un diamètre extérieur (D233b), lequel est supérieur à un diamètre extérieur (D233a) du deuxième axe d'enfichage supérieur (233a),
**caractérisé en ce que**
le ressort (242b ; 243b) du dispositif d'encliquetage (242 ; 243) est formé par une partie d'encliquetage (251) de l'axe d'enfichage inférieur (233b ; 633b) du manchon double (241 ; 602), laquelle est séparée, du côté longitudinal, d'une partie de retenue (252) de l'axe d'enfichage inférieur (233b ; 633b) par des entailles (251a ; 251b) s'étendant les unes à côté des autres axialement dans la direction d'un axe longitudinal (L233) du raccord de tubes (123, 124 ; 233 ; 234 ; 601) et est raccordée à la partie de retenue (252) de l'axe d'enfichage inférieur (233b ; 633b) du côté transversal, l'ergot d'encliquetage (242a ; 243a) étant raccordé à la partie d'encliquetage (251).

6. Raccord de tubes (123, 124 ; 233 ; 234 ; 601) selon la revendication 5, **caractérisé en ce que** le premier axe d'enfichage inférieur (233b ; 633b) du manchon double (241 ; 602) comporte au moins un autre, deuxième, un dispositif d'encliquetage (243), le premier et le deuxième dispositif d'encliquetage (242 ; 243) étant disposés en regard l'un de l'autre, et **en ce que** le deuxième axe d'enfichage supérieur (233a) du raccord de tubes (123, 124 ; 233 ; 234 ; 601) comporte en particulier au moins un premier alésage (B3-233a) et de préférence au moins un autre, deuxième, alésage (B4-233a), le premier et le deuxième alésage (B3-233a ; B4-233a) étant disposés en particulier en regard l'un de l'autre.

7. Raccord de tubes (123, 124 ; 233 ; 234 ; 601) selon au moins l'une des revendications 5 et 6, **caractérisé en ce que** le premier axe d'enfichage inférieur (233b ; 633b) du manchon double (241 ; 602) est réalisé comme axe d'enfichage de type tube doté d'un espace intérieur cylindrique ou comme axe d'enfichage de type broche en matériau plein, et **en ce que** le deuxième axe d'enfichage supérieur (233a) du raccord de tubes (123, 124 ; 233 ; 234 ; 601) est réalisé comme axe d'enfichage de type tube doté d'un espace intérieur cylindrique ou comme axe d'enfichage de type broche en matériau plein.

8. Raccord de tubes (123, 124 ; 233 ; 234 ; 601) selon au moins l'une des revendications 5 à 7, **caractérisé en ce que** le premier axe d'enfichage inférieur (633b) du manchon double (602) comprend, sur sa surface d'enveloppe extérieure (AMF633b), au moins un logement (681 ; 682) et en particulier deux logements (681 ; 682) en regard l'un de l'autre.

9. Raccord de tubes (123, 124 ; 233 ; 234 ; 601) selon au moins l'une des revendications 5 à 8, **caractérisé en ce que** soit le manchon double (602) est réalisé comme composant en particulier d'une seule pièce et de préférence comme composant en matière synthétique d'une seule pièce soit le raccord de tubes (601) comporte un manchon central (603) en plus du manchon double (602) configuré comme composant en particulier d'une seule pièce, de préférence comme composant en matière synthétique d'une seule pièce, le manchon central (603) s'étendant par sa longueur (L603) en particulier sur une longueur (L602) du manchon double (602), le manchon central (603) étant réalisé en particulier comme manchon métallique, le manchon central (603) étant raccordé en particulier par friction au manchon double (602) formant un manchon extérieur.

10. Raccord de tubes (123, 124 ; 233 ; 234 ; 601) selon la revendication 9, **caractérisé en ce que** le manchon central (603) comprend un évidement (691 ; 692) dans la région de chaque dispositif d'encliquetage (642 ; 643) du manchon double (602), l'évidement (691 ; 692) étant dimensionné de telle sorte que le dispositif d'encliquetage (642 ; 643) est déformable dans la direction d'un axe longitudinal (L601) du raccord de tubes (601), et **en ce qu'**il est en particulier prévu que le manchon central (603) comprenne un autre évidement (693 ; 694) dans la région de chaque alésage (B3-633a ; B4-633a) du manchon double (602), l'évidement (693 ; 694) étant de préférence réalisé comme alésage traversant ou comme alésage fileté.

11. Système de raccordement comportant au moins une première pièce rapportée (121 ; 122) et au moins une deuxième pièce rapportée (221 ; 222), le système de raccordement étant prévu pour le raccordement d'un premier composant d'échafaudage inférieur (101) et d'un deuxième composant d'échafaudage supérieur (201), en particulier d'une barre profilée creuse inférieure (103 ; 104) et d'une barre profilée creuse supérieure (203 ; 204) et de préférence d'un premier cadre d'échafaudage (102), lequel comporte au moins une barre profilée creuse (103 ; 104), et d'un deuxième cadre d'échafaudage (202), lequel comporte au moins une barre profilée creuse (203 ; 204), **caractérisé en ce que** la première pièce rapportée (121 ; 122) est réalisée comme raccord de tubes (123, 124) et peut être installée dans le composant d'échafaudage inférieur (101), **en ce que** la deuxième pièce rapportée (221 ; 222) est réalisée comme manchon de réduction (223, 224) et peut être installée dans le composant d'échafaudage supérieur (201), **en ce que** le manchon de réduction (223, 224) est réalisé en particulier selon au moins l'une des revendications 1 à 4, **en ce que** le raccord de tubes (123, 124) est réalisé selon au moins l'une des revendications 5 à 10 et **en ce que** le raccord de tubes (123, 124) peut être enfiché dans le manchon de réduction (223, 224).

12. Composant d'échafaudage (101 ; 201 ; 301 ; 401), en particulier barre profilée creuse (103 ; 104 ; 203 ; 204 ; 703) ou cadre d'échafaudage doté d'au moins une barre profilée creuse (103 ; 104 ; 203 ; 204 ; 703), **caractérisé**
- **en ce que** le composant d'échafaudage (101 ; 201 ; 301 ; 401) comporte une partie tubulaire supérieure (103a ; 104a ; 203a ; 204a) et une partie tubulaire inférieure (103b ; 104b ; 203b ; 204b),
- **en ce que** le composant d'échafaudage (101 ; 201 ; 301 ; 401) comporte en outre un manchon de réduction (223, 224 ; 323 ; 423 ; 523) selon au moins l'une des revendications 1 à 4 et/ou en ce que le composant d'échafaudage (101 ; 201 ; 301 ; 401) comporte un raccord de tubes (123, 124 ; 233 ; 234 ; 601) selon au moins l'une des revendications 5 à 10,
- **en ce qu'**au moins un alésage (B1-204a ; B2-204a) est disposé sur la partie tubulaire supérieure (103a ; 104a ; 203a ; 204a), alésage dans lequel un ergot d'encliquetage (242a ; 243a) du raccord de tubes (123, 124 ; 233 ; 234 ; 601) est encliqueté et/ou en ce qu'au moins un alésage (B1-204b ; B2-204b) est disposé sur la partie tubulaire inférieure (103b ; 104b ; 203b ; 204b), dans lequel un ergot d'encliquetage (262a ; 263a) du manchon de réduction (223, 224 ; 323 ; 423 ; 523) est encliqueté et
- **en ce qu'**il est en particulier également prévu qu'une partie de déformation (797 ; 798) en particulier similaire à une partie d'anneau circulaire soit réalisée sur la partie tubulaire supérieure (703a) par des fentes de séparation (797a ; 797b ; 798a ; 798b) en regard les unes des autres, s'étendent radialement et divisant la partie tubulaire supérieure (703a), laquelle partie de déformation est déformée plastiquement par une force de pression et en l'occurrence aplatie de telle sorte que la partie de déformation déformée (797 ; 798) fasse saillie dans une cavité (H703a) de la partie tubulaire supérieure (703a) et un logement (681 ; 682) du manchon de réduction (223, 224 ; 323 ; 423 ; 523).

13. Système d'échafaudage comportant au moins un premier composant d'échafaudage (101 ; 201 ; 301 ; 401), en particulier une barre profilée creuse (103 ; 104 ; 203 ; 204 ; 703) ou un cadre d'échafaudage (102 ; 202) doté d'au moins une barre profilée creuse (103 ; 104 ; 203 ; 204 ; 703) et au moins un deuxième composant d'échafaudage (101 ; 201 ; 301 ; 401), en particulier une barre profilée creuse (103 ; 104 ; 203 ; 204 ; 703) ou un cadre d'échafaudage doté d'au moins une barre profilée creuse (103 ; 104 ; 203 ; 204 ; 703), le premier composant d'échafaudage (101) comportant au moins une première pièce rapportée (121 ; 122), et le deuxième composant d'échafaudage (201) comportant au moins une deuxième pièce rapportée (221 ; 222), **caractérisé**
- **en ce que** la deuxième pièce rapportée (221 ; 222) est réalisée comme manchon de réduction (223, 224 ; 323 ; 423 ; 523) et est réalisée en particulier selon au moins l'une des revendications 1 à 4 et en ce que la première pièce rapportée (121 ; 1222) est réalisée comme raccord de tubes (123, 124 ; 233 ; 234 ; 601) et est réalisée selon au moins l'une des revendications 5 à 10,
- **en ce que** le raccord de tubes (123, 124) est logé dans une ouverture supérieure, côté extrémité, de la tige profilée creuse (103 ; 104) du premier composant d'échafaudage inférieur (101) et est encliqueté avec celui-ci et en ce que le manchon de réduction (223, 224) est logé dans une ouverture inférieure, côté extrémité, de la tige profilée creuse (203 ; 204) du deuxième composant d'échafaudage supérieur (201) et est encliqueté avec celui-ci,
- **en ce que** le premier composant d'échafaudage inférieur (101) peut être enfiché, par un axe d'enfichage supérieur (233a) du raccord de tubes (233 ; 234), dans un espace intérieur (226b) du manchon de réduction (223, 224) raccordé au deuxième composant d'échafaudage supérieur (201) et en ce que le système d'échafaudage est en particulier réalisé de telle sorte qu'au moins deux des composants d'échafaudage (101 ; 201) sont réalisés selon la revendication 12.

14. Système d'échafaudage selon la revendication 13, **caractérisé en ce que** le premier composant d'échafaudage (101) est réalisé comme premier cadre d'échafaudage (102) et **en ce que** le deuxième composant d'échafaudage (201) est réalisé comme deuxième cadre d'échafaudage (202).

15. Système d'échafaudage selon la revendication 13 ou 14, **caractérisé en ce que** le premier cadre d'échafaudage (102) comporte une deuxième barre profilée creuse (104), un deuxième raccord de tubes (124) étant logé dans une ouverture, côté extrémité, de la deuxième barre profilée creuse (104) du premier cadre d'échafaudage inférieur (102) et étant encliqueté avec la deuxième barre profilée creuse (104) du premier cadre d'échafaudage inférieur (102) et en particulier raccordé par complémentarité de forme à celle-ci, **en ce que** le deuxième cadre d'échafaudage (202) comporte une deuxième barre profilée creuse (204), un deuxième manchon de réduction (224) étant logé dans une ouverture, côté extrémité, de la deuxième barre profilée creuse (204) du deuxième cadre d'échafaudage supérieur (202) et étant encliqueté avec la deuxième barre profilée creuse (204) du deuxième cadre d'échafaudage supérieur (202).

16. Système d'échafaudage selon au moins l'une des revendications 13 à 15, **caractérisé en ce que** chaque barre profilée creuse (103 ; 104 ; 203 ; 204 ; 703) comprend au moins un alésage (B1-204a ; B2-204a ; B1-204b ; B2-204b) pour le logement d'un ergot d'encliquetage (242a ; 243a ; 262a ; 263a) d'un dispositif d'encliquetage (242 ; 243 ; 262 ; 263) du manchon de réduction (223, 224 ; 323 ; 423 ; 523) ou du raccord de tubes (123, 124 ; 233 ; 234 ; 601).

17. Système d'échafaudage selon au moins l'une des revendications 13 à 16, **caractérisé**
- **en ce que** le manchon de réduction (223, 224 ; 323 ; 423 ; 523), par son diamètre extérieur, et la partie tubulaire inférieure (103b ; 104b ; 203b ; 204b) de la barre profilée creuse (103 ; 104 ; 203 ; 204), par son diamètre intérieur, sont adaptés l'un à l'autre à la manière d'un ajustement glissant gras,
- **en ce que** le raccord de tubes (123, 124 ; 233 ; 234 ; 601), par un diamètre extérieur (D233b) de son axe d'enfichage inférieur (233b), et la partie tubulaire supérieure (103a ; 104a ; 203a ; 204a) de la barre profilée creuse (103 ; 104 ; 203 ; 204 ; 703), par son diamètre intérieur, sont adaptés l'un à l'autre à la manière d'un ajustement glissant gras et
- **en ce que** le raccord de tubes (123, 124 ; 233 ; 234 ; 601), par un diamètre extérieur (D233a) de son axe d'enfichage supérieur (233a), et le manchon de réduction (223, 224 ; 323 ; 423 ; 523), par son diamètre intérieur, sont adaptés l'un à l'autre à la manière d'un ajustement glissant gras.

18. Système d'échafaudage selon au moins l'une des revendications 13 à 17, **caractérisé en ce que** le cadre d'échafaudage supérieur sont assemblés avec intercalation du premier et du deuxième manchon de réduction (223 ; 244) et du premier et du deuxième raccord de tubes (123 ; 124) entre la première et la deuxième barre profilée creuse (103 ; 104) du cadre d'échafaudage inférieur (102) et la première et la deuxième barre profilée creuse (203 ; 204) du cadre d'échafaudage supérieur (202) de telle sorte que
- le premier raccord de tubes (123) est enfiché par son axe d'enfichage inférieur dans le premier profilé creux (103) du cadre d'échafaudage inférieur (102) et est enfiché par son axe d'enfichage supérieur dans le premier manchon de réduction supérieur (223) raccordé au premier profilé creux (203) du cadre d'échafaudage supérieur (202)
- et que le deuxième raccord de tubes (124) est enfiché par son axe d'enfichage inférieur dans le deuxième profilé creux (104) du cadre d'échafaudage inférieur (102) et est enfiché par son axe d'enfichage supérieur dans le deuxième manchon de réduction supérieur (224) raccordé au deuxième profilé creux (204) du cadre d'échafaudage supérieur (202).

19. Procédé de fabrication d'un composant d'échafaudage (701), en particulier d'une barre profilée creuse (703) ou d'un cadre d'échafaudage (702), lequel comporte au moins une barre profilée creuse (703), le composant d'échafaudage (701) comportant un raccord de tubes (601) selon au moins l'une des revendications 5 à 10, comportant les étapes suivantes :
- introduction de fentes de séparation (797a ; 797b ; 798a ; 798b) se faisant face et s'étendent radialement sur une partie tubulaire supérieure (703a) de la barre profilée creuse (703) du composant d'échafaudage (701), la partie tubulaire supérieure (703a) étant divisée par les fentes de séparation (797a ; 797b ; 798a ; 798b), et une partie de déformation (797 ; 798) en particulier similaire à une partie d'anneau circulaire étant réalisée,
- enfichage du raccord de tubes (601) dans une ouverture, côté extrémité, de la barre profilée creuse (703) de telle sorte qu'un dispositif d'encliquetage (642 ; 643) du raccord de tubes (601) s'encliquète par un ergot d'encliquetage (642a ; 643a) dans un alésage (B1-703a ; B2-703a) de la barre profilée creuse (103 ; 104 ; 203 ; 204 ; 703) et
- enfoncement plastique de la partie de déformation (797 ; 798), de telle sorte que la région d'enveloppe déformée fasse saillie dans une cavité (H703a) de la partie tubulaire supérieure (703a) et dans un logement (681 ; 682) du raccord de tubes (601).
